(19) Europäisches Patentamt
European Patent Office
Office européen des brevets

(11) EP 3 476 595 A1

(12) **EUROPEAN PATENT APPLICATION**
published in accordance with Art. 153(4) EPC

(43) Date of publication:
**01.05.2019 Bulletin 2019/18**

(21) Application number: **17820142.2**

(22) Date of filing: **27.06.2017**

(51) Int Cl.:
***B32B 27/30*** (2006.01) ***C08L 33/04*** (2006.01)
***C08L 53/00*** (2006.01) ***G02B 5/30*** (2006.01)

(86) International application number:
**PCT/JP2017/023548**

(87) International publication number:
**WO 2018/003788 (04.01.2018 Gazette 2018/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.06.2016 JP 2016126965**

(71) Applicant: **Kuraray Co., Ltd.**
**Kurashiki-shi, Okayama 710-0801 (JP)**

(72) Inventors:
- **TAKEDA, Hideaki**
  **Tainai-shi**
  **Niigata 959-2691 (JP)**
- **HIGASHIDA, Noboru**
  **Tainai-shi**
  **Niigata 959-2691 (JP)**
- **FUJII, Emi**
  **Kurashiki-shi**
  **Okayama 713-8550 (JP)**

(74) Representative: **Müller-Boré & Partner Patentanwälte PartG mbB**
**Friedenheimer Brücke 21**
**80639 München (DE)**

(54) **MOLDED BODY COMPRISING ACRYLIC RESIN COMPOSITION**

(57) A multi-layer shaped product, comprising a layer composed of an acrylic resin composition comprising a (meth)acrylic resin (A) and an acrylic block copolymer (B) comprising an acrylic acid ester polymer block (a) and a methacrylic acid ester polymer block (b), and if necessary, particles of an acrylic elastomeric polymer (C), and a layer composed of an active energy ray cured resin that is in contact with the layer composed of the acrylic resin composition, wherein an amount of the acrylic block copolymer (B) comprised in the acrylic resin composition is not less than 1 part by mass and not more than 60 parts by mass based on 100 parts by mass of the acrylic resin composition.

EP 3 476 595 A1

## Description

### TECHNICAL FIELD

The present invention relates to a shaped product comprising an acrylic resin composition. More particularly, the present invention relates to a shaped product comprising an acrylic resin composition, which has excellent adhesiveness to an active energy ray cured resin, high toughness and excellent optical properties.

### BACKGROUND ART

There have been proposed various acrylic resin compositions that attempt to improve impact resistance, thermal stability, weatherability, transparency, surface smoothness, surface hardness and the like.

For example, Patent Document 1 discloses a resin composition obtained by mixing 0.5 to 50 parts by weight of a block copolymer (III) composed of a polymer block (A) comprising 50 to 100% by weight of a unit of an olefinic monomer and 50 to 0% by weight of a unit of a vinyl monomer copolymerizable with the olefinic monomer and a polymer block (B) comprising 55 to 100% by weight of a unit of an acrylic acid ester and 45 to 0% by weight of a unit of a vinyl monomer copolymerizable with the acrylic acid ester, to 100 parts by weight of the total of 5 to 95 parts by weight of a polyolefinic resin (I) and 95 to 5 parts by weight a methacrylic resin (II).

Patent Document 2 discloses a methacrylic resin composition in which 1 to 80 parts by mass of a star block copolymer (B) comprising a polymer block (a) composed of an alkyl (meth) acrylic acid ester unit and a polymer block (b) composed of a conjugated diene compound unit is dispersed in 100 parts by mass of a matrix (A) composed of a methacrylic resin comprising not less than 50% by mass of a methyl methacrylate unit.

Patent Document 3 discloses a methacrylic resin film having a layer made of a methacrylic resin composition comprising 100 parts by mass of a continuous phase composed of a methacrylic resin (A) comprising not less than 50% by mass of a repeating unit derived from methyl methacrylate, and 1 to 80 parts by mass of a dispersed phase composed of a block copolymer (B) comprising 30 to 65% by mass of a polymer block (a) having a glass transition temperature of not higher than 23°C composed of a repeating unit derived from an alkyl (meth) acrylate and 35 to 70% by mass of a polymer block (b) having a glass transition temperature of not higher than 0°C composed of a repeating unit derived from a conjugated diene compound.

Patent Document 4 discloses a rubber modified methacrylic resin composition comprising 100 parts by mass of a rubber modified resin (I) comprising 100 parts by mass of a methacrylic resin (A) comprising not less than 50% by mass of a methyl methacrylate unit and 1 to 80 parts by mass of a block copolymer (B) comprising a polymer block (a) composed of an alkyl (meth)acrylate unit and a polymer block (b) composed of a conjugated diene compound unit, 0.005 to 0.5 part by mass of a thermal deterioration inhibitor (II) such as 2-t-butyl-6-(3'-tert-butyl-5'-methyl-hydroxybenzyl)-4-methylphenyl acrylate, and 0.005 to 1 part by mass of an ultraviolet absorber (III), wherein domains composed of the block copolymer (B) are dispersed in a matrix composed of the methacrylic resin (A).

Patent Document 5 discloses a multi-layered film obtained by laminating a first layer composed of a methacrylic resin film (I) made of a methacrylic resin composition in which 1 to 80 parts by mass of a block copolymer (B), as a dispersed phase, comprising a polymer block (a) having a glass transition temperature of not higher than 23°C composed of a constitutional unit derived from an alkyl (meth) acrylate and a polymer block (b) having a glass transition temperature of not higher than 0°C composed of a constitutional unit derived from a conjugated diene compound exists in a continuous phase (A) composed of 100 parts by mass of a methacrylic resin comprising not less than 50% by mass of a constitutional unit derived from methyl methacrylate, and a second layer composed of an acrylic block copolymer film (II) made of a composition comprising an acrylic block copolymer (C) comprising two or more polymer blocks (C) having a glass transition temperature of not lower than 50°C composed of a constitutional unit derived from an alkyl (meth) acrylate and one or more polymer blocks (d) having a glass transition temperature of not higher than 20°C composed of a constitutional unit derived from an alkyl (meth)acrylate.

Patent Document 6 discloses an acrylic resin film comprising 50 to 99 parts by mass of a methacrylic resin (A) comprising not less than 80% by mass of a structural unit derived from methyl methacrylate and 50 to 1 part by mass of a block copolymer (B) comprising 40 to 90% by mass of a methacrylic acid ester polymer block (b1) and 10 to 60% by mass of an acrylic acid ester polymer block (b2) (in which the total amount of the methacrylic resin (A) and the block copolymer (B) is 100 parts by mass), wherein a weight average molecular weight Mw (A) of the methacrylic resin (A), a maximum weight average molecular weight Mw(bl) of the methacrylic acid ester polymer block (b1) and a maximum weight average molecular weight Mw(b2) of the acrylic acid ester polymer block (b2) satisfy the following relationships (1) and (2):

$$(1)\ 0.5 \leq Mw(A)/Mw(b1) \leq 2.3,$$

and

$$(2)\ 30,000 \leq Mw(b2) \leq 120,000.$$

CITATION LIST

PATENT LITERATURES

Patent Document 1 : JP 2001-247723 A
Patent Document 2 : WO 2008/032732 A1
Patent Document 3 : JP 2009-228000 A
Patent Document 4 : JP 2011-16915 A
Patent Document 5 : JP 2012-213911 A
Patent Document 6 : WO 2015/076398 A1
Patent Document 7 : JP 2010-231015 A

SUMMARY OF THE INVENTION

PROBLEMS TO BE SOLVED BY THE INVENTION

There are cases where an adhesive comprising an active energy ray curable composition is applied to a resin shaped product such as a film and other members are pressed against the adhesive coating film thus formed, and then the adhesive is cured by irradiation with active energy ray, thus laminating the resin shaped product and other members through the cured resin layer. Such a film may require strong adhesiveness enough to cause little or no peeling off from the cured resin layer easily. Patent Document 7 proposes bonding a polarizer protective film having a layer made of a thermoplastic resin composition comprising 55 to 75 parts by weight of an acrylic resin and 25 to 45 parts by weight of an elastomeric particle. However, adhesiveness to an adhesive layer is not always adequate.

An object of the present invention is to provide a shaped product comprising an acrylic resin composition, which has excellent adhesiveness to an active energy ray cured resin, high toughness and excellent optical properties.

MEANS FOR SOLVING THE PROBLEMS

Intensive studies for solving the above problems results in completing the present invention including the following embodiments.

[1] A multi-layer shaped product, comprising
a layer made of an acrylic resin composition comprising a (meth) acrylic resin (A) and an acrylic block copolymer (B) comprising an acrylic acid ester polymer block (a) and a methacrylic acid ester polymer block (b), and

a layer made of an active energy ray cured resin that is in contact with the layer made of the acrylic resin composition, wherein
an amount of the acrylic block copolymer (B) comprised in the acrylic resin composition is not less than 1 part by mass and not more than 60 parts by mass based on 100 parts by mass of the acrylic resin composition.

[2] The shaped product according to the embodiment [1], wherein the acrylic block copolymer (B) comprises 20 to 80% by mass of an acrylic acid ester polymer block (a) and 20 to 80% by mass of a methacrylic acid ester polymer block (b).
[3] The shaped product according to the embodiment [1] or [2], wherein the amount of the acrylic block copolymer (B) comprised in the acrylic resin composition is not less than 2 parts by mass and less than 15 parts by mass based on 100 parts by mass of the acrylic resin composition.

[4] The shaped product according to the embodiment [1], [2] or [3], wherein the acrylic resin composition further comprises an elastomeric polymer (C).

[5] The shaped product according to the embodiment [4], wherein the elastomeric polymer (C) is formed of a particle and comprises a polymer (c2) comprising 70 to 99.8% by mass of an acrylic acid non-cyclic alkyl ester and 0.2 to 30% by mass of a crosslinkable monomer.

[6] The shaped product according to the embodiment [4], wherein the elastomeric polymer (C) is formed of a core-shell multi-layered particle, at least one layer thereof comprises a polymer (c2) comprising 70 to 99.8% by mass of an acrylic acid non-cyclic alkyl ester and 0.2 to 30% by mass of a crosslinkable monomer, and at least one layer outside the layer comprising the polymer (c2) comprises a polymer (c1) comprising 80 to 100% by mass of methyl methacrylate.

[7] The shaped product according to any one of the embodiments [4] to [6], wherein an amount of the elastomeric polymer (C) comprised in the acrylic resin composition is 1 to 30 parts by mass based on 100 parts by mass of the acrylic resin composition.

[8] The shaped product according to any one of the embodiments [1] to [7], wherein an amount of a structural unit derived from a (meth) acrylic acid ester comprised in the (meth)acrylic resin (A) is not less than 80% by mass based on an amount of all structural units comprised in the (meth)acrylic resin (A).

[9] The shaped product according to any one of the embodiments [1] to [8], wherein the acrylic block copolymer (B) is a triblock copolymer.

[10] The shaped product according to any one of the embodiments [1] to [8], wherein the acrylic block copolymer (B) is a triblock copolymer represented by polymer block (b)-polymer block (a)-polymer block (b) and weight average molecular weights of two polymer blocks (b) are different from each other.

[11] The shaped product according to any one of the embodiments [1] to [10], wherein the active energy ray cured resin is an ultraviolet cured resin.

[12] The shaped product according to any one of the embodiments [1] to [11], wherein the active energy ray cured resin comprises a cationic polymer cured resin.

[13] The shaped product according to any one of the embodiments [1] to [12], which is a film having a total thickness of 10 to 1,000 μm.

[14] A polarizer protective film comprising the shaped product according to any one of the embodiments [1] to [13].

[15] A polarizing plate comprising the shaped product according to any one of the embodiments [1] to [13].

ADVANTAGEOUS EFFECTS OF THE INVENTION

The shaped product of the present invention has excellent adhesiveness to an active energy ray cured resin, high toughness and excellent optical properties.

The shaped product of the present invention is suitable, for example, for optical films such as a polarizer protective film.

EMBODIMENTS FOR CARRYING OUT THE INVENTION

(Shaped product of Acrylic Resin Composition)

The shaped product according to the present invention comprises an acrylic resin composition.

The acrylic resin composition used in the present invention comprises a (meth)acrylic resin (A) and an acrylic block copolymer (B).

An amount of the (meth) acrylic resin (A) comprised in the acrylic resin composition is preferably not less than 40 parts by mass and not more than 99 parts by mass, more preferably not less than 70 parts by mass and not more than 98 parts by mass, still more preferably not less than 80 parts by mass and not more than 98 parts by mass, yet more preferably more than 85 parts by mass and not more than 98 parts by mass, and particularly preferably not less than 89 parts by mass and not more than 95 parts by mass, based on 100 parts by mass of the acrylic resin composition.

An amount of the acrylic block copolymer (B) comprised in the acrylic resin composition is preferably not less than 1 part by mass and not more than 60 parts by mass, more preferably not less than 2 parts by mass and not more than 30 parts by mass, more preferably not less than 2 parts by mass and not more than 20 parts by mass, still more preferably not less than 2 parts by mass and less than 15 parts by mass, and particularly preferably not less than 5 parts by mass and not more than 11 part by mass, based on 100 parts by mass of the acrylic resin composition. From the viewpoint of haze and surface hardness, the amount thereof is most preferably not less than 7 parts by mass and not more than 10 parts by mass.

By setting the amounts of the (meth) acrylic resin (A) and the acrylic block copolymer (B) comprised in the acrylic resin composition in the above ranges, the obtained shaped product is excellent in surface hardness, toughness,

transparency, heat resistance and adhesiveness to an active energy ray cured resin.

A melt viscosity at 270°C and a shear rate of 122 $sec^{-1}$ of the acrylic resin composition is preferably 300 to 1,000 Pa·s, more preferably 400 to 800 Pa·s, still more preferably 450 to 700 Pa·s, and yet more preferably 500 to 650 Pa·s, from the viewpoint of impact resistance, toughness, haze and surface hardness.

The (meth)acrylic resin (A) used in the present invention is a thermoplastic resin comprising one structural unit derived from a (meth) acrylic acid ester or two or more structural units derived from a (meth)acrylic acid ester in a random arrangement.

Examples of the (meth)acrylic acid ester can include acrylic acid non-cyclic alkyl esters such as methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, 2-ethylhexyl acrylate, pentadecyl acrylate and dodecyl acrylate; acrylic acid aryl esters such as phenyl acrylate; acrylic acid aralkyl esters such as benzyl acrylate and phenoxyethyl acrylate; acrylic acid cyclic alkyl esters such as cyclohexyl acrylate, norbornyl acrylate and isobornyl acrylate; 2-hydroxyethyl acrylate, 2-ethoxyethyl acrylate, glycidyl acrylate, allyl acrylate; methacrylic acid non-cyclic alkyl esters such as methyl methacrylate, ethyl methacrylate, n-propyl methacrylate, isopropyl methacrylate, n-butyl methacrylate, isobutyl methacrylate, sec-butyl methacrylate, tert-butyl methacrylate, amyl methacrylate, isoamyl methacrylate, n-hexyl methacrylate, 2-ethylhexyl methacrylate, pentadecyl methacrylate and dodecyl methacrylate; methacrylic acid aryl esters such as phenyl methacrylate; methacrylic acid aralkyl esters such as benzyl methacrylate and phenoxyethyl methacrylate; methacrylic acid cyclic alkyl esters such as cyclohexyl methacrylate, 8-tricyclo[5.2.1.$0^{2,6}$]decanyl methacrylate, 4-t-butylcyclohexyl methacrylate and norbornyl methacrylate; 2-hydroxyethyl methacrylate, 2-ethoxyethyl methacrylate, glycidyl methacrylate, allyl methacrylate and the like.

An amount of the structural unit derived from a (meth) acrylic acid ester comprised in the (meth) acrylic resin (A) is preferably not less than 80% by mass, more preferably not less than 90% by mass, still more preferably not less than 95% by mass, yet more preferably not less than 98% by mass, and most preferably not less than 99.5% by mass, based on an amount of all structural units comprised in the (meth)acrylic resin (A). By setting the amount of structural unit derived from a (meth) acrylic acid ester comprised in the (meth)acrylic resin (A) in the above range, a shaped product having high surface hardness is obtained.

The (meth)acrylic resin (A) may comprise one or more structural units derived from monomers other than the (meth)acrylic acid ester in a random arrangement. Examples of monomers other than the (meth) acrylic acid ester can include unsaturated carboxylic acids such as acrylic acid, methacrylic acid, maleic anhydride, maleic acid and itaconic acid; olefins such as ethylene, propylene, 1-butene, isobutylene and 1-octene; conjugated dienes such as butadiene, isoprene and myrcene; aromatic vinyl compounds such as styrene, $\alpha$-methylstyrene, p-methylstyrene and m-methylstyrene; acrylamide, methacrylamide, acrylonitrile, methacrylonitrile, vinyl acetate, vinylpyridine, vinyl ketone, vinyl chloride, vinylidene chloride, vinylidene fluoride and the like. An amount of the structural unit derived from monomers other than the (meth)acrylic acid ester, which can be comprised in the (meth) acrylic resin (A), is not particularly limited as long as it is possible to get a balance with the amount of the structural unit derived from the (meth)acrylic acid ester, and is preferably not more than 20% by mass, more preferably not more than 10% by mass, still more preferably not more than 5% by mass, yet more preferably not more than 2% by mass, and most preferably not more than 0.5% by mass.

The (meth)acrylic resin (A) is not particularly limited by the conformation of the asymmetric carbon on the molecular chain. It is possible to exemplify a structure in which the conformation is the same in diad (isotactic diad structure or mesostructure [m]), a structure in which the conformation is different in diad (syndiotactic diad structure or racemo structure [r]), a structure in which isotactic diad structures are aligned in triad (isotactic triad structure, [m, m]), a structure in which syndiotactic diad structures are aligned in triad (syndiotactic triad structure, [r, r]), a structure in which an isotactic diad structure and a syndiotactic diad structure are aligned in triad (heterotactic triad structure, [m, r] or [r, m]) and the like. From the viewpoint of heat resistance, the (meth)acrylic resin (A) used in the present invention preferably has many syndiotactic triad structures.

In the (meth) acrylic resin (A), a ratio $Mw_A/Mn_A$ of a weight average molecular weight $Mw_A$ to a number average molecular weight $Mn_A$ calculated in terms of polystyrene based on chromatogram obtained by gel permeation chromatography is preferably not less than 1.05 and not more than 3, and more preferably not less than 1.3 and not more than 2.5.

One example of the (meth)acrylic resin (A) preferably used in the present invention is a polymer comprising only a structural unit derived from methyl methacrylate (hereinafter sometimes referred to as methacrylic resin [A0]) or a random copolymer comprising a structural unit derived from methyl methacrylate and a structural unit derived from other monomers and having no ring structure in its main chain (hereinafter this random copolymer is sometimes referred to as methacrylic resin [A1]). Examples of other monomers in the methacrylic resin [A1] can include acrylic acid non-cyclic alkyl ester; acrylic acid aryl esters; acrylic acid aralkyl esters; acrylic acid cyclic alkyl esters; 2-hydroxyethyl acrylate, 2-ethoxyethyl acrylate, glycidyl acrylate, allyl acrylate; methacrylic acid non-cyclic alkyl esters other than methyl methacrylate; methacrylic acid aryl esters; methacrylic acid aralkyl esters; methacrylic acid cyclic alkyl esters; 2-hydroxyethyl methacrylate, 2-ethoxyethyl methacrylate, glycidyl methacrylate, allyl methacrylate; unsaturated carboxylic acids; olefins; conjugated dienes; aromatic vinyl compounds; acrylamide, methacrylamide, acrylonitrile, methacrylonitrile, vinyl acetate,

vinylpyridine, vinyl ketone, vinyl chloride, vinylidene chloride, vinylidene fluoride and the like.

In the methacrylic resin (A1), the amount of the structural unit derived from methyl methacrylate is preferably not less than 80% by mass, more preferably not less than 90% by mass, still more preferably not less than 95% by mass, yet more preferably not less than 98% by mass, and most preferably not less than 99.5% by mass, based on the total structural units. The amount of the structural unit derived from other monomers and having no ring structure in the main chain is not particularly limited as long as it is possible to get a balance with the amount of the structural unit derived from methyl methacrylate, and is preferably not more than 20% by mass, more preferably not more than 10% by mass, still more preferably not more than 5% by mass, yet more preferably not more than 2% by mass, and most preferably not more than 0.5% by mass.

In the methacrylic resin [A0] or the methacrylic resin (A1), the lower limit of syndiotacticity (rr) is preferably 58%, more preferably 59%, and still more preferably 60%. The upper limit of syndiotacticity (rr) of the methacrylic resin [A0] or the methacrylic resin [A1] is not particularly limited, and is preferably 99%, more preferably 85%, still more preferably 77%, yet more preferably 65%, and most preferably 64%, from the viewpoint of film-forming properties.

Syndiotacticity (rr) is a ratio of a syndiotactic triad structure to a total triad structure. The syndiotacticity (rr) (%) can be determined by measuring $^1$H-NMR spectrum at 30°C in deuterated chloroform, measuring area (X) in a region of 0.6 to 0.95 ppm and area (Y) in a region of 0.6 to 1.35 ppm from the spectrum when TMS is 0 ppm, and calculating by the formula: $(X/Y) \times 100$.

In the methacrylic resin [A0] or the methacrylic resin [A1], a weight average molecular weight $Mw_{A1}$ calculated in terms of polystyrene based on a chromatogram obtained by gel permeation chromatography is preferably 50 thousand to 200 thousand, more preferably 55 thousand to 160 thousand, and still more preferably 60 thousand to 120 thousand. As $Mw_{A1}$ becomes higher, strength of a shaped product obtained from the methacrylic resin [A0] or the methacrylic resin [A1] tends to become higher. As $Mw_{A1}$ becomes lower, moldability of the methacrylic resin [A0] or the methacrylic resin [A1] tends to become better and surface smoothness of the obtained shaped product tends to become better.

In the methacrylic resin [A0] or the methacrylic resin [A1], a ratio $Mw_{A1}/Mn_{A1}$ of the weight average molecular weight $Mw_{A1}$ to a number average molecular weight $Mn_{A1}$ calculated in terms of polystyrene based on the chromatogram obtained by gel permeation chromatography is preferably not less than 1.05 and not more than 3, more preferably not less than 1.3 and not more than 2.5, and still more preferably not less than 1.3 and not more than 1.7. As $Mw_{A1}/Mn_{A1}$ becomes lower, impact resistance or toughness tends to become better. As $Mw_{A1}/Mn_{A1}$ becomes higher, melt fluidity of the methacrylic resin [A0] or the methacrylic resin [A1] tends to become higher and surface smoothness of the obtained shaped product tends to become better.

In the methacrylic resin [A0] or the methacrylic resin [A1] used in the present invention, a content of a component having a molecular weight of not less than 200,000 (high molecular weight component) is preferably 0.1 to 10%, and more preferably 0.5 to 5%. In the methacrylic resin [A0] or the methacrylic resin [A1] used in the present invention, the content of a component having a molecular weight of less than 15,000 (low molecular weight component) is preferably 0.1 to 5%, and more preferably 0.2 to 3%. When the methacrylic resin [A0] or the methacrylic resin [A1] contains the high molecular weight component and the low molecular weight component in these ranges, film-forming properties are improved and it is easier to obtain a film having a uniform thickness.

The content of the component having a molecular weight of not less than 200,000 is calculated as a ratio of square measure of an area surrounded by a chromatogram and a base line before a retention time of standard polystyrene having a molecular weight of 200,000 to square measure of the whole area surrounded by the chromatogram and the base line, wherein the chromatogram detected by GPC. The content of the component having a molecular weight of 15,000 is calculated as a ratio of square measure of an area surrounded by the chromatogram and the base line after a retention time of standard polystyrene having a molecular weight of 15,000 to the square measure of the whole area surrounded by the chromatogram and the base line, wherein the chromatogram detected by GPC.

Measurement by gel permeation chromatography is performed as follows. Tetrahydrofuran is used as an eluent and two TSKgel SuperMultipore HZM-M columns and a SuperHZ 4000 column, manufactured by TOSOH CORPORATION, connected in series are used as a measuring column. As an analyzer, HLC-8320 (product number) equipped with a differential refractive index detector (RI detector) manufactured by TOSOH CORPORATION was used. In 5 ml of tetrahydrofuran, 4 mg of a methacrylic resin to be tested was dissolved to prepare a solution to be tested. A temperature of a column oven was set at 40°C and 20 $\mu$l of the solution to be tested was injected at an eluent flow rate of 0.35 ml/min, and then the chromatogram was measured.

The chromatogram is a chart in which an electric signal value (intensity Y) derived from a refractive index difference between the test target solution and the reference solution is plotted on the retention time X.

Standard polystyrenes having a molecular weight in a range of 400 to 5,000,000 were measured by gel permeation chromatography to prepare a calibration curve showing a relationship between a retention time and a molecular weight. The base line is a line connecting a point where inclination of high molecular weight side of a peak in the chromatogram changes from zero to plus and a point where inclination of low molecular weight side of the peak in the chromatogram changes from minus to zero. When the chromatogram shows multiple peaks, the base line is a line

connecting a point where slope of the peak on the highest molecular weight side changes from zero to plus and a point where slope of the peak on the lowest molecular weight side changes from minus to zero.

In the methacrylic resin [A0] or the methacrylic resin [A1], a melt flow rate determined by measuring under a temperature of 230°C and a load of 3.8 kg is preferably 0.1 to 30 g/10min., more preferably 0.5 to 20 g/10min., and still more preferably 1 to 15 g/10 min.

The methacrylic resin [A0] or the methacrylic resin [A1] has a glass transition temperature of preferably not lower than 100°C, more preferably not lower than 110°C, still more preferably not lower than 120°C, and particularly preferably not lower than 123°C. The upper limit of the glass transition temperature of the methacrylic resin [A0] or the methacrylic resin [A1] is not particularly limited and is preferably 131°C. When the glass transition temperature is not lower than 100°C, the obtained shaped product is excellent in heat resistance.

The glass transition temperature is an midpoint glass transition temperature obtained from a DSC curve. The DSC curve is obtained by differential scanning calorimetry at a second temperature rise when the temperature of a resin to be measured is firstly raised to 230°C, followed by cooling to room temperature and secondly raising the temperature from room temperature to 230°C at 10°C/minute, using a differential scanning calorimeter in conformity with JIS K7121.

Another example of the (meth)acrylic resin (A) preferably used in the present invention is a random copolymer comprising essentially a structural unit derived from methyl methacrylate and a structural unit having a cyclic structure in the main chain (hereinafter sometimes referred to as methacrylic resin (A2)) from the viewpoint of heat resistance.

In the methacrylic resin [A2], the content of the structural unit derived from methyl methacrylate is preferably 20 to 99% by mass, more preferably 30 to 95% by mass, and still more preferably 40 to 90% by mass, and the content of the structural unit having a cyclic structure in the main chain is preferably 1 to 80% by mass, more preferably 5 to 70% by mass, and still more preferably 10 to 60% by mass. The content of the structural unit derived from methyl methacrylate in the methacrylic resin [A2] does not include those converted into the structural unit having a cyclic structure in the main chain by intramolecular cyclization out of the structural unit derived from methyl methacrylate.

The methacrylic resin [A2] may comprise structural units other than the structural unit derived from methyl methacrylate and the structural unit having a cyclic structure in the main chain. These other structural units may be structural units derived from monomers exemplified as monomers other than methyl methacrylate as described above.

The structural unit having a ring structure in the main chain is preferably a structural unit having a >CH-O-C(=O)- group in the ring structure, a structural unit having a -C(=O)-O-C(=O)- group in the ring structure, a structural unit having a -C(=O)-N-C(=O)-group in the ring structure, or a structural unit having a >CH-O-CH< group in the ring structure.

The structural unit having a ring structure in the main chain can be comprised in the methacrylic resin by copolymerizing a cyclic monomer having a polymerizable unsaturated carbon-carbon double bond such as maleic anhydride or N-substituted maleimide with methyl methacrylate or the like, or by allowing part of a molecular chain of methacrylic resin obtained by polymerization to undergo intramolecular condensation cyclization.

Examples of the structural unit having a >CH-O-C(=O)- group in the ring structure can include lactonediyl structural units such as a β-propiolactonediyl (another name: oxooxetanediyl) structural unit, a γ-butyrolactonediyl (another name: 2-oxodihydrofuranediyl) structural unit, a δ-valerolactonediyl (another name: 2-oxodihydropyranediyl) structural unit and the like. ">C" in the formula means that two bondings exist in carbon atom C.

As the δ-valerolactonediyl structural unit, mentioned can be a structural unit represented by the formula (Ib). The δ-valerolactonediyl structural unit is preferably a structural unit represented by the formula (Ic).

[Chem. 1]

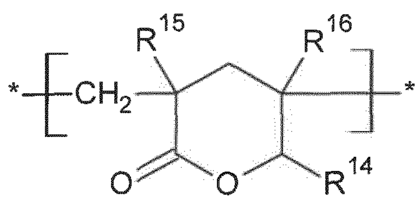

(Ib)

In the formula (Ib), $R^{14}$ and $R^{15}$ are each independently a hydrogen atom or an organic residue having 1 to 20 carbon atoms, $R^{16}$ is -COOR, and R is a hydrogen atom or an organic residue having 1 to 20 carbon atom. * means a bonding.

Examples of organic residue in the formula (Ib) can include a linear or branched alkyl group, a linear or branched alkylene group, an aryl group, an -OAc group, a -CN group and the like. The organic residue may have an oxygen atom. "Ac" represents an acetyl group. The organic residue preferably has 1 to 10 carbon atoms, and more preferably 1 to 5 carbon atoms.

[Chem. 2]

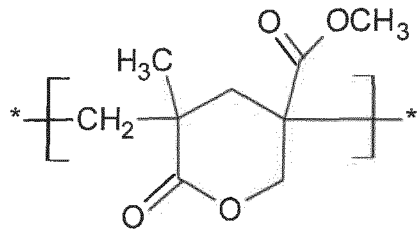

(Ic)

The δ-valerolactonediyl structural unit can be comprised in the methacrylic resin by, for example, intramolecular cyclization of two adjacent structural units derived from methyl methacrylate.

Examples of the structural unit having a -C(=O)-O-C(=O)- group in the ring structure can include a 2,5-dioxodihydrofuranediyl structural unit, a 2,6-dioxodihydropyranediyl structural unit, a 2,7-dioxooxepanediyl structural unit and the like.

As the 2,5-dioxodihydrofuranediyl structural unit, for instance, mentioned can be a structural unit represented by the formula (IIa). The 2,5-dioxodihydrofuranediyl structural unit is preferably a structural unit represented by the formula (IIb).

[Chem. 3]

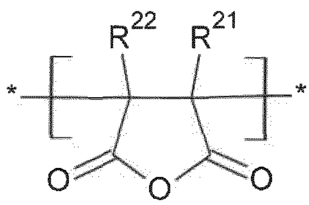

(IIa)

In the formula (IIa), $R^{21}$ and $R^{22}$ are each independently a hydrogen atom or an organic residue having 1 to 20 carbon atoms. * means a bonding.

Examples of the organic residue in the formula (IIa) can include a linear or branched alkyl group, a linear or branched alkylene group, an aryl group, an -OAc group, a -CN group and the like. The organic residue may contain an oxygen atom. "Ac" represents an acetyl group. The organic residue preferably has 1 to 10 carbon atoms, and more preferably 1 to 5 carbon atoms.

When both of $R^{21}$ and $R^{22}$ are hydrogen atom, it is preferable that styrene or the like is usually copolymerized from the viewpoint of ease of production, control of intrinsic birefringence and the like. Specific examples thereof can include a copolymer comprising a structural unit derived from styrene, a structural unit derived from methyl methacrylate and a structural unit derived from maleic anhydride as described in WO 2014/021264 A.

[Chem. 4]

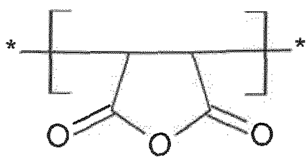

(IIb)

The 2,5-dioxodihydrofuranediyl structural unit can be comprised in a methacrylic resin by copolymerization of maleic anhydride. * means a bonding.

Examples of the 2,6-dioxodihydropyranediyl structural unit can include a structural unit represented by the formula (IIIa) and a structural unit represented by the formula (IIIb). The 2,6-dioxodihydropyranediyl structural unit is preferably a structural unit represented by the formula (IIIc).

[Chem. 5]

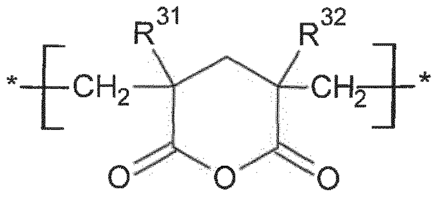

(IIIa)

In the formula (IIIa), $R^{31}$ and $R^{32}$ are each independently a hydrogen atom or an organic residue having 1 to 20 carbon atoms. * means a bonding.

[Chem. 6]

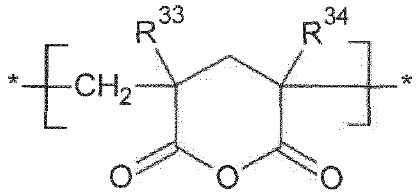

(IIIb)

In the formula (IIIb), $R^{33}$ and $R^{34}$ are each independently a hydrogen atom or an organic residue having 1 to 20 carbon atoms. * means a bonding.

Examples of the organic residue in the formulae (IIIa) and (IIIb) can include a linear or branched alkyl group, a linear or branched alkylene group, an aryl group, an -OAc group, -CN group and the like. The organic residue may contain an oxygen atom. "Ac" represents an acetyl group. The organic residue preferably has 1 to 10 carbon atoms, and more preferably 1 to 5 carbon atoms.

[Chem. 7]

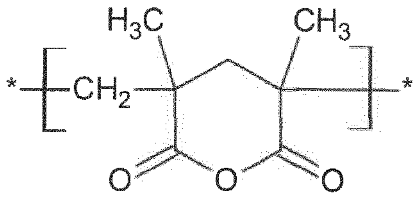

(IIIc)

The 2,6-dioxodihydropyranediyl structural unit can be comprised in the methacrylic resin by, for example, intramolecular cyclization of two adjacent structural units derived from methyl methacrylate.

Examples of the structural unit having a -C(=O)-N-C(=O)- group in the ring structure (note that another bonding which N has is omitted) can include a 2,5-dioxopyrrolidinediyl structural unit, a 2,6-dioxopiperidinediyl structural unit, a 2,7-dioxoazepandiyl structural unit and the like.

As the 2,6-dioxopiperidinediyl structural unit, mentioned can be a structural unit represented by the formula (IVa). The 2,6-dioxopiperidinediyl structural unit is preferably a structural unit represented by the formula (IVb).

[Chem. 8]

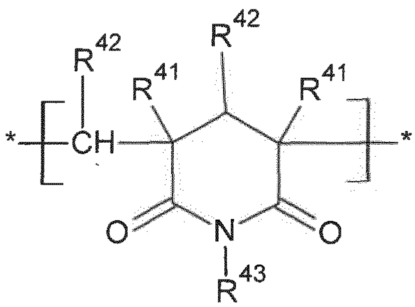

(Iva)

In the formula (IVa), $R^{41}$ and $R^{42}$ are each independently a hydrogen atom or an alkyl group having 1 to 8 carbon atoms, and $R^{43}$ is a hydrogen atom, an alkyl group having 1 to 18 carbon atoms, a cycloalkyl group having 3 to 12 carbon atoms or an aryl group having 6 to 10 carbon atoms. * means a bonding.

From the viewpoint of raw materials ready availability, cost, heat resistance and the like, it is preferable that $R^{41}$ and $R^{42}$ are each independently a hydrogen atom or a methyl group, and $R^{43}$ is preferably a hydrogen atom, a methyl group, a n-butyl group, a cyclohexyl group or a benzyl group.

[Chem. 9]

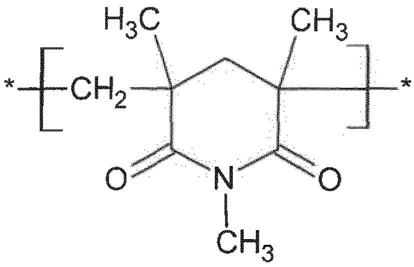

(IVb)

As the 2,5-dioxopyrrolidinediyl structural unit, mentioned can be a structural unit represented by the formula (Va). The 2,6-dioxopiperidinediyl structural unit is preferably a structural unit represented by the formula (Vb) or a structural unit represented by the formula (Vc).

[Chem. 10]

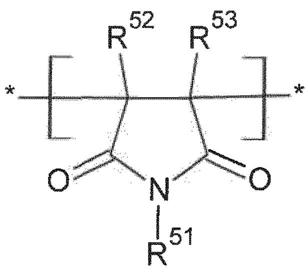

(Va)

In the formula (Va), $R^{52}$ and $R^{53}$ are each independently a hydrogen atom, an alkyl group having 1 to 12 carbon atoms or an alkyl group having 6 to 14 carbon atoms, and $R^{51}$ is an arylalkyl group having 7 to 14 carbon atoms or an unsubstituted or substituted aryl group having 6 to 14 carbon atoms. The substitution group in the substituted aryl group is a halogeno group, a hydroxyl group, a nitro group, an alkoxy group having 1 to 12 carbon atoms, an alkyl group having 1 to 12 carbon atoms or an arylalkyl group having 7 to 14 carbon atoms. * means a bonding.

[Chem. 11]

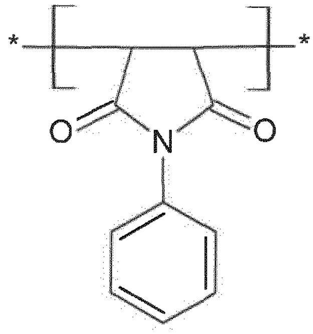

(Vb)

[Chem. 12]

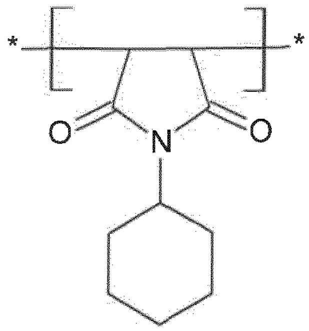

(Vc)

The 2,5-dioxopyrrolidinediyl structural unit can be comprised in the methacrylic resin by copolymerization of N-substituted maleimide.

Examples of the structural unit having a >CH-O-CH< group in the ring structure can include an oxetanediyl structural unit, a tetrahydrofurandiyl structural unit, a tetrahydropyrandiyl structural unit, an oxepanediyl structural unit and the like. ">C" in the formula means that two bondings exist in carbon atom C.

As the tetrahydropyrandiyl structural unit, mentioned can be a structural unit represented by the formula (VIa).

[Chem. 13]

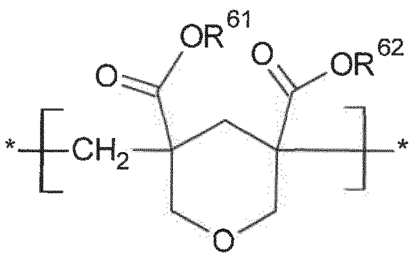

(Via)

In the formula (VIa), $R^{61}$ and $R^{62}$ are each independently a hydrogen atom, a linear or branched hydrocarbon group having 1 to 20 carbon atoms, or a hydrocarbon group having 3 to 20 carbon atoms which has a ring structure. * means a bonding.

It is preferable that $R^{61}$ and $R^{62}$ are each independently a tricyclo[5.2.1.0$^{2,6}$]decanyl group (formula (VI-1)), a 1,7,7-trimethylbicyclo[2.2.1]heptan-3-yl group (formula (VI-2)), a tert-butyl group (formula (VI-3)) or a 4-t-butylcyclohexanyl group (formula (VI-4)). In the formula (VI-1) to (VI-4), + represents a bonding position.

[Chem. 14]

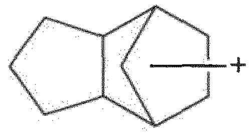

(VI-1)

[Chem. 15]

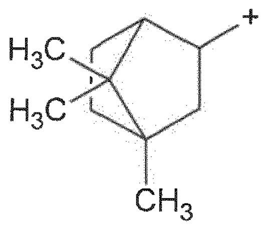

(VI-2)

[Chem. 16]

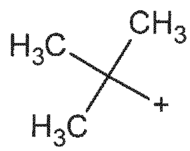

(VI-3)

[Chem. 17]

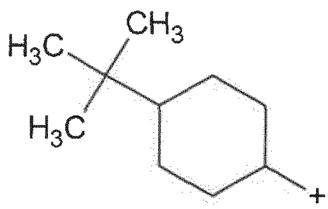

(VI-4)

Among the structural units having the ring structure in the main chain, a δ-valerolactonediyl structural unit or a 2,5-dioxodihydrofuranediyl structural unit is preferable from the viewpoint of raw materials and productivity.

In the methacrylic resin [A2], a weight average molecular weight $Mw_{A2}$ calculated in terms of polystyrene based on a chromatogram obtained by gel permeation chromatography is preferably 50 thousand to 200 thousand, more preferably 55 thousand to 160 thousand, and still more preferably 60 thousand to 120 thousand. As $Mw_{A2}$ becomes higher, strength of a shaped product obtained from the methacrylic resin [A2] tends to become higher. As $Mw_{A2}$ becomes lower, moldability of the methacrylic resin [A2] tends to become better and surface smoothness of the obtained shaped product tends to become better.

In methacrylic resin [A2], a ratio $Mw_{A2}/Mn_{A2}$ of the weight average molecular weight $Mw_{A2}$ to a number average molecular weight $Mn_{A2}$ calculated in terms of polystyrene based on the chromatogram obtained by gel permeation chromatography is preferably not less than 1.05 and not more than 3, more preferably not less than 1.3 and not more than 2.5, and still more preferably not less than 1.3 and not more than 1.7. As $Mw_{A2}/Mn_{A2}$ becomes lower, impact resistance or toughness tends to become better. As $Mw_{A2}/Mn_{A2}$ becomes higher, melt fluidity of the methacrylic resin [A2] tends to become higher and surface smoothness of the obtained shaped product tends to become better.

In the methacrylic resin [A2], a melt flow rate determined by measuring under a temperature of 230°C and a load of 3.8 kg is preferably 0.1 to 20 g/10min., more preferably 0.5 to 15 g/10min., and still more preferably 1 to 10 g/10min.

The methacrylic resin [A2] has a glass transition temperature of preferably not lower than 110°C, more preferably not lower than 120°C, still more preferably not lower than 125°C, and particularly preferably not lower than 130°C. The upper limit of the glass transition temperature of the methacrylic resin [A2] is not particularly limited and is preferably 140°C.

The (meth)acrylic resin (A) used in the present invention may be those which satisfy the above-mentioned

properties by one (meth)acrylic resin, or may be those which satisfy the above-mentioned properties by a mixture of two or more (meth)acrylic resins.

One (meth)acrylic resin or two or more (meth)acrylic resins constituting the (meth)acrylic resin (A) used in the present invention may be obtained by any production method. For example, the methacrylic resin can be obtained by polymerizing methyl methacrylate or polymerizing methyl methacrylate with other monomers. The polymerization can be performed by a known method. The method of polymerization can classified into radical polymerization, anionic polymerization and the like according to mode of chain transfer. Also, the method of polymerization can classified into bulk polymerization, solution polymerization, suspension polymerization, emulsion polymerization and the like according to form of the reaction solution. The properties of the above-mentioned methacrylic resins [A0], [A1] and [A2] can be realized by adjusting polymerization conditions such as polymerization temperature, polymerization time, type and amount of a chain transfer agent, addition timing of the chain transfer agent, type and amount of a polymerization initiator, and addition timing of the polymerization initiator. Such properties modification under these polymerization conditions is a technique well known to one skilled in the art, and it is not difficult for one skilled in the art to produce a resin having objective properties. It is possible to obtain a methacrylic resin [A2] by the above-mentioned intramolecular cyclization of the resin obtained by the above-mentioned polymerization.

The (meth)acrylic resin (A) used in the present invention may be a commercially available product. Examples thereof can include "PARAPET H1000B" (MFR: 22 g/10min.(230°C, 37.3 N)), "PARAPET GF" (MFR: 15 g/10min. (230°C, 37.3 N)), "PARAPET EH" (MFR: 1.3 g/10min. (230°C, 37.3 N)), "PARAPET HRL" (MFR: 2.0 g/10min. (230°C, 37.3 N)), "PARAPET HRS" (MFR: 2.4 g/10min. (230°C, 37.3 N)) and "PARAPET G" (MFR: 8.0 g/10min. (230°C, 37.3 N)) [all of which are trade names, manufactured by KURARAY CO., LTD.]

The acrylic block copolymer (B) used in the present invention comprises an acrylic acid ester polymer block (a) and a methacrylic acid ester polymer block (b). The lower limit of the amount of the acrylic acid ester polymer block (a) is preferably 20% by mass, more preferably 30% by mass, and still more preferably 40% by mass, based on the acrylic block copolymer from the viewpoint of melt viscosity, adhesiveness and toughness. The upper limit of the amount of the acrylic acid ester polymer block (a) is preferably 80% by mass, more preferably 70% by mass, and still more preferably 60% by mass, based on the acrylic block copolymer from the viewpoint of transparency, surface hardness and heat resistance. The amount of the acrylic acid ester polymer block (a) is still more preferably 40 to 60% by mass based on the acrylic block copolymer from the viewpoint of haze. The lower limit of the amount of the methacrylic acid ester polymer block (b) is preferably 20% by mass, more preferably 30% by mass, and still more preferably 40% by mass, based on the acrylic block copolymer from the viewpoint of transparency, surface hardness and heat resistance. The upper limit of the amount of the methacrylic acid ester polymer block (b) is preferably 80% by mass, more preferably 70% by mass, and still more preferably 60% by mass, based on the acrylic block copolymer from the viewpoint of melt viscosity, adhesiveness and toughness. The amount of the methacrylic acid ester polymer block (b) is still more preferably 40 to 60% by mass based on the acrylic block copolymer from the viewpoint of haze.

The polymer block (a) mainly comprises a structural unit derived from an acrylic acid ester. The amount of the structural unit derived from an acrylic acid ester comprised in the polymer block (a) is preferably 50 to 100% by mass, more preferably 70 to 100% by mass, still more preferably 80 to 100% by mass, and yet more preferably 90 to 100% by mass, based on the polymer block (a) from the viewpoint of melt viscosity, adhesiveness and toughness.

Examples of the acrylic acid ester can include acrylic acid non-cyclic alkyl esters such as methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, 2-ethylhexyl acrylate, pentadecyl acrylate and dodecyl acrylate; acrylic acid cyclic alkyl esters such as cyclohexyl acrylate and isobornyl acrylate; acrylic acid aryl esters such as phenyl acrylate; acrylic acid aralkyl esters such as benzyl acrylate and phenoxyethyl acrylate; 2-hydroxyethyl acrylate, 2-methoxyethyl acrylate, glycidyl acrylate, allyl acrylate and the like. These acrylic acid esters can be polymerized alone or in combination of two or more thereof. Among these, n-butyl acrylate is preferable from the viewpoint of cost, low-temperature properties and the like.

The polymer block (a) may comprise a structural unit derived from a monomer other than the acrylic acid ester as long as it does not interfere with the objects and effects of the present invention.

The amount of the structural unit derived from a monomer other than the acrylic acid ester which can be included in the polymer block (a) is preferably not more than 50% by mass, more preferably not more than 30% by mass, still more preferably not more than 20% by mass, and particularly preferably not more than 10% by mass.

Examples of the monomer other than the acrylic acid ester can include methacrylic acid esters, unsaturated carboxylic acids, aromatic vinyl compounds, olefins, conjugated dienes, acrylonitrile, methacrylonitrile, acrylamide, methacrylamide, vinyl acetate, vinylpyridine, vinyl ketone, vinyl chloride, vinylidene chloride, vinylidene fluoride and the like. These monomers can be copolymerized alone or in combination of two or more thereof with the above-mentioned acrylic acid ester.

From the viewpoint of optical properties, the polymer block (a) preferably comprises a pendant of the molecular chain wherein the pendant is a group having an aromatic ring. The polymer block (a) which has a group having an

aromatic ring as the pendant of the molecular chain can be obtained, for example, by copolymerizing acrylic acid aryl esters, acrylic acid aralkyl esters or aromatic vinyl compounds.

The polymer block (b) mainly comprises a structural unit derived from a methacrylic acid ester. The amount of the structural unit derived from the methacrylic acid ester comprised in the polymer block (b) is preferably 80 to 100% by mass, more preferably 90 to 100% by mass, still more preferably 95 to 100% by mass, and yet more preferably 98 to 100% by mass, based on the polymer block (b) from the viewpoint of transparency, surface hardness and heat resistance.

Examples of the methacrylic acid ester can include methacrylic acid non-cyclic alkyl esters such as methyl methacrylate, ethyl methacrylate, n-propyl methacrylate, isopropyl methacrylate, n-butyl methacrylate, isobutyl methacrylate, sec-butyl methacrylate, tert-butyl methacrylate, amyl methacrylate, isoamyl methacrylate, n-hexyl methacrylate, 2-ethylhexyl methacrylate, pentadecyl methacrylate and dodecyl methacrylate; methacrylic acid cyclic alkyl esters such as cyclohexyl methacrylate and isobornyl methacrylate; methacrylic acid aryl esters such as phenyl methacrylate; methacrylic acid aralkyl esters such as benzyl methacrylate and phenoxyethyl methacrylate; 2-hydroxyethyl methacrylate, 2-methoxyethyl methacrylate, glycidyl methacrylate, allyl methacrylate and the like. These methacrylic acid esters can be polymerized alone or in combination of two or more thereof. Among these, methacrylic acid non-cyclic alkyl esters or methacrylic acid cyclic alkyl esters are preferable and methyl methacrylate is more preferable from the viewpoint of improving transparency, surface hardness and heat resistance.

The polymer block (b) may comprise a structural unit derived from a monomer other than the methacrylic acid ester as long as it does not interfere with the objects and effects of the present invention. The amount of the structural unit derived from the monomer other than the methacrylic acid ester which can be included in the polymer block (b) is preferably not more than 20% by mass, more preferably not more than 10% by mass, still more preferably not more than 5% by mass, and yet more preferably not more than 2% by mass.

Examples of the monomer other than the methacrylic acid ester can include acrylic acid esters, unsaturated carboxylic acids, aromatic vinyl compounds, olefins, conjugated dienes, acrylonitrile, methacrylonitrile, acrylamide, methacrylamide, vinyl acetate, vinylpyridine, vinyl ketone, vinyl chloride, vinylidene chloride, vinylidene fluoride and the like. These monomers can be copolymerized alone or in combination of two or more thereof with the above-mentioned methacrylic acid ester.

The polymer block (b) has a syndiotacticity (rr) of preferably not less than 60%, more preferably not less than 65%, still more preferably not less than 70%, and most preferably not less than 75%, from the viewpoint of high glass transition temperature, high heat resistance and the like.

The acrylic block copolymer (B) may have a functional group such as a hydroxy group, a carboxy group, an acid anhydride group and an amino group in the molecular chain or at the molecular chain end. When the acrylic block copolymer (B) having a functional group is used, adhesiveness or cohesiveness to an active energy ray cured resin may become higher. From the viewpoint of cohesiveness to an active energy ray cured resin, the functional group is preferably a hydroxy group or a carboxy group. Without departing from the scope of the invention, the acrylic block copolymer (B) may comprise another polymer block in addition to the polymer block (a) and the polymer block (b).

The acrylic block copolymer (B) is not particularly limited by the sequence of the polymer block (a) and the polymer block (b). Examples thereof can include a diblock copolymer comprising a polymer block (a) and a polymer block (b); a triblock copolymer represented by polymer block (a)-polymer block (b) -polymer block (a), a triblock copolymer represented by polymer block (b)-polymer block (a)-polymer block (b) ; a multiblock copolymer in which a polymer block (a) and a polymer block (b) are alternately bonded in series four or more polymer blocks in total, a star block copolymer in which two or more diblock copolymers or triblock copolymers are radially bonded, a graft copolymer in which two or more diblock copolymers or triblock copolymers are bonded to one trunk polymer chain in a branched manner and the like. Among these, a triblock copolymer is preferable and a triblock copolymer represented by polymer block (b)-polymer block (a) -polymer block (b) is more preferable from the viewpoint of cohesiveness, impact resistance, cost and the like. When two or more polymer blocks (a) or polymer blocks (b) are comprised in the block copolymer, physical properties such as molecular weight, monomer composition and stereoregularity thereof may be the same or different from each other.

In the triblock copolymer represented by polymer block (b)-polymer block (a)-polymer block (b) preferably used in the present invention, a weight average molecular weights of two polymer blocks (b) are preferably different from each other from the viewpoint of melt fluidity, miscibility and the like. A weight average molecular weight ratio of two polymer blocks (b) (large weight average molecular weight/small weight average molecular weight) is preferably 1.01 to 5, and more preferably 1.1 to 4.5.

The acrylic block copolymer (B) is not particularly limited by its production method. For example, it is possible to produce an acrylic block copolymer (B) in which a polymer block (a) and a polymer block (b) are bonded in series by a living polymerization method. Graft polymerization reaction enables production of a graft copolymer comprising in which two or more diblock copolymers or triblock copolymers are bonded to one trunk polymer chain in a branched manner.

Coupling reaction of the diblock copolymer or the triblock copolymer obtained by the living polymerization

enables production of a star block in which two or more diblock copolymers or triblock copolymer are radially bonded.

Examples of the living polymerization method can include a living anionic polymerization method, a living cationic polymerization method, a living radical polymerization method and the like. As the living polymerization method, mentioned can be a method which is performed using an organic alkali metal compound and an alkali metal salt of a mineral acid or an alkaline earth metal salt of a mineral acid, a method which is performed using an organic alkali metal compound and an organic aluminum compound, a method which is performed using an organic rare earth metal complex, a method which is performed using an $\alpha$-halogenated ester compound and a copper compound or the like. Among these, a living anionic polymerization method is preferable and a living anionic polymerization method using an organic alkali metal compound and an organoaluminum compound is preferable.

The acrylic resin composition can further comprise an elastomeric polymer (C). An elastic modulus (Young's modulus) at room temperature of the elastomeric polymer (C) is preferably 1 to 10 MPa. It is preferable that the elastomeric polymer (C) has such a property that it elongates several times as long as the original length with slight stress and does not undergo fracture, and also returns to its original state almost instantaneously when the external force is removed.

Examples of the elastomeric polymer (C) can include acrylic elastomeric polymers, silicone-based elastomeric polymers; styrene-based thermoplastic elastomers such as SEPS, SEBS and SIS; and olefinic elastomeric polymers such as IR, EPR and EPDM. Among these, an acrylic elastomeric polymer is preferable from the viewpoint of transparency and toughness.

The acrylic elastomeric polymer is a polymer comprising a structural unit derived from an acrylic acid non-cyclic alkyl ester in the main component. The content of the structural unit derived from an acrylic acid non-cyclic alkyl ester in the acrylic elastomeric polymer is preferably 50 to 100% by mass, and more preferably 70 to 99.8% by mass. In the acrylic acid non-cyclic alkyl ester used in the acrylic elastomeric polymer, a non-cyclic alkyl group has preferably 4 to 8 carbon atoms, specifically, is an n-butyl group, an n-pentyl group, an n-hexyl, an n-heptyl group, an n-octyl group or isomeric groups thereof. Examples of a monomer other than the acrylic acid non-cyclic alkyl esters can include methacrylic acid alkyl esters such as methyl methacrylate and ethyl methacrylate; styrene-based monomers such as styrene and alkylstyrene; unsaturated nitriles such as acrylonitrile and methacrylonitrile; 2-chloroethylvinyl ether; and alkylene glycol (meth)acrylates such as ethylene glycol(meth)acrylate, ethoxy-diethylene glycol acrylate, methoxy-triethylene glycol acrylate, 2-ethylhexyl-diglycol acrylate, methoxy-polyethylene glycol acrylate, methoxydipropylene glycol acrylate, phenoxydiethylene glycol acrylate, phenoxy-polyethylene glycol acrylate and nonylphenol EO adduct acrylate.

The acrylic elastomeric polymer is preferably a polymer comprising a structural unit derived from an acrylic acid non-cyclic alkyl ester and a structural unit derived from a crosslinkable monomer at random (polymer (c2)). Examples of the crosslinkable monomer can include allyl (meth)acrylate, metallyl (meth)acrylate, diallyl maleate; triethylene glycol diacrylate, PEG diacrylate, 1,6-hexanediol diacrylate, 1,9-nonanediol diacrylate; trimethylolpropane triacrylate, pentaerythritol triacrylate, pentaerythritol tetraacrylate, dipentaerythritol hexaacrylate and the like. The content of the structural unit derived from a crosslinkable monomer in the acrylic elastomeric polymer is preferably 0.2 to 30% by mass from the viewpoint of toughness.

The elastomeric polymer (C) may be a particle made of a single polymer or a particle in which at least two layers are formed of polymers having different elastic modulus. The elastomeric polymer (C) can include the above-mentioned acrylic elastomeric polymer. The elastomeric polymer (C) is preferably a core-shell multi-layered particle comprising a layer comprising the above-mentioned acrylic elastomeric polymer and a layer comprising other polymers, more preferably a core-shell two-layered particle comprising a layer comprising an acrylic polymer and a layer comprising a methacrylic polymer covering over the acrylic polymer layer, and still more preferably a core-shell three-layered particle comprising a layer comprising a methacrylic polymer, a layer comprising an acrylic elastomeric polymer covering over the methacrylic polymer layer, and a layer comprising a methacrylic polymer covering over the acrylic elastomeric polymer layer. The methacrylic polymer is preferably a polymer comprising a structural unit derived from a methacrylic acid noncyclic alkyl ester as a main component. The content of the structural unit derived from the methacrylic acid noncyclic alkyl ester in the methacrylic polymer is preferably 50 to 100% by mass, and more preferably 80 to 100% by mass. The methacrylic acid non-cyclic alkyl ester is preferably methyl methacrylate. From the viewpoint of miscibility with the (meth) acrylic resin (A), the methacrylic polymer is most preferably a polymer (c1) comprising 80 to 100% by mass of methyl methacrylate.

The elastomeric polymer (C) in the form of particle has a number average particle diameter of preferably 150 to 350 nm, and more preferably 200 nm to 300 nm, from the viewpoint of transparency, toughness, adhesiveness and the like. The number average particle diameter of the elastomeric polymer (C) was determined based on a microscopic photograph observed after staining a sample obtained by melt-kneading the elastomeric polymer (C) in the (meth)acrylic resin (A) with ruthenium oxide. Since a layer comprising an acrylic elastomeric polymer is stained with ruthenium oxide, a layer comprising a methacrylic polymer is not stained therewith, so that it is presumed that the number average particle diameter of the core-shell two-layered particle or the core-shell three-layered particle corresponds to a value not including the thickness of the outer-most layer comprising the methacrylic polymer.

The amount of the elastomeric polymer (C) contained in the acrylic resin composition is preferably 1 to 30 parts

by mass, more preferably 2 to 20 parts by mass, still more preferably 3 to 15 parts by mass, and yet more preferably 4 to 12 parts by mass, based on 100 parts by mass of the acrylic resin composition from the viewpoint of transparency, hardness, melt viscosity, toughness, lubricity, and cohesiveness to an active energy ray cured resin. It is preferable that the acrylic resin composition comprises not less than 1 part by mass of the elastomeric polymer (C), since impact resistance and tear resistance may be improved.

The acrylic resin composition may optionally comprise various additives such as polymer processing aids, light stabilizers, ultraviolet absorbers, antioxidants, heat stabilizers, lubricants, antistatic agents, colorants, impact resistance aids and the like as long as the effects of the present invention are not impaired. From the viewpoint of mechanical properties and surface hardness of the film of the present invention, it is preferable that the acrylic resin composition does not contain a large amount of foaming agents, fillers, delustering agents, light diffusing agents, softening agents and plasticizers.

The acrylic resin composition used in the present invention is not particularly limited by the preparation method thereof. One example of a method for preparing the acrylic resin composition is a method in which a (meth)acrylic resin (A), an acrylic block copolymer (B), and optionally an elastomeric polymer (C) and additives to be mixed are melt-kneaded. The elastomeric polymer (C) and the additive to be optionally mixed may be added and kneaded together when the (meth)acrylic resin (A) and the acrylic block copolymer (B) are kneaded, or may be added to the (meth)acrylic resin (A) and kneaded before the (meth) acrylic resin (A) and the acrylic block copolymer (B) are kneaded. Examples of the apparatus for performing kneading can include a kneader ruder, a twin-screw extruder, a single-screw extruder, a mixing roll, a Banbury mixer and the like. Among these, a twin-screw extruder is preferable from the viewpoint of kneadability, and a twin-screw extruder with a vent is preferable from the viewpoint of suppression of coloration. In the twin-screw extruder with a vent, it is preferable to operate under reduced pressure or while allowing nitrogen to flow. The shear rate during melt-kneading is preferably 10 to 1,000/sec. The temperature during kneading can be appropriately adjusted according to the temperature at which the (meth) acrylic resin (A) and the acrylic block copolymer (B) are soften, and is preferably 110 to 300°C, more preferably 180 to 300°C, and still more preferably 230 to 270°C. The resin composition melt-kneaded in the extruder is extruded in a strand form and can be cut into pellets by a pelletizer or the like.

Another example of a method for preparing an acrylic resin composition is a method in which a monomer constituting a (meth)acrylic resin (A) is polymerized in the presence of an acrylic block copolymer (B) to obtain an acrylic resin composition in situ. In the in situ method, the resin composition is hardly exposed to high temperature as compared with the melt-kneading method, so that coloration may hardly occur.

The acrylic resin composition used in the present invention may be in any form such as pellets, granules and powders for facilitating transportation, storage and molding.

The shaped product of the present invention can be obtained by shape forming of the above-mentioned acrylic resin composition. The forming method is not particularly limited. It is possible to use, for example, known forming methods such as extrusion forming (T-die method, etc.), injection molding, compression forming, inflation forming, blow forming, calendar forming, cast forming and vacuum molding. For film forming, an extrusion forming method is preferably employed. According to the extrusion forming method, especially the T-die method, it is possible to obtain a film having improved toughness, excellent handleability, and excellent balance among toughness, surface hardness and rigidity. The lower limit of the thickness of the film obtained by forming of the acrylic resin composition is preferably 10 μm, more preferably 30 um, and still more preferably 50 μm, while the upper limit of the thickness thereof is preferably 1,000 μm, more preferably 500 μm, still more preferably 300 μm, and yet more preferably 200 μm. The extruder used for the extrusion forming method, especially the T-die method, is preferably a single-screw or twin-screw screw extruder. It is preferable that melt-extrusion is performed under reduced pressure using a vent from the viewpoint of suppression of coloration, a gear pump is attached from the viewpoint of producing a film having a uniform thickness, and melt-extrusion is performed using a polymer filter in order to reduce fish eyes defect. From the viewpoint of suppressing oxidative deterioration, melt extrusion is preferably performed in a nitrogen gas stream. The temperature of the acrylic resin composition discharged from the extruder is set at preferably 230 to 290°C, and more preferably 240 to 280°C.

From the viewpoint of surface smoothness and thickness uniformity of the film, it is preferable that the extruded film-like molten resin composition is nipped and compressed between specular rolls or specular belts.

It is preferable that both of the specular rolls or the specular belts are made of metal. From the viewpoint of surface smoothness, the linear pressure between the specular rolls or the specular belts is preferably not less than 10 N/mm, and more preferably not less than 30 N/mm. From the viewpoint of surface smoothness, haze, appearance and the like, the specular roll or specular belt has a lower surface temperature limit of preferably 60°C, and more preferably 70°C, while the upper surface temperature limit of preferably 130°C, and more preferably 100°C.

The shaped product of the present invention may be those which are formed into a film and subjected to a stretching treatment. The stretching treatment may enable an improvement in mechanical strength, and thus cracking hardly occurs. Examples of the stretching method can include, but are not particularly limited to, a simultaneous biaxial stretching method, a sequential biaxial stretching method, a tubular stretching method, a rolling method and the like. The lower limit of the temperature during stretching is preferably a temperature which is 5°C higher than the glass

transition temperature of the (meth)acrylic resin (A), while the upper limit thereof is preferably a temperature which is 40°C higher than the glass transition temperature of the (meth)acrylic resin (A). The stretching rate is preferably 100 to 5,000%/minute. In the stretching treatment, it is more preferable to perform a heat fixing step after the stretching step. By heat fixing, a film with little heat shrinkage can be obtained. The thickness of the film obtained by stretching is preferably 10 to 200 $\mu$m.

The shaped product of the present invention can be composited or laminated with heterogeneous materials by a lamination method, a coextrusion method, an insert method, a two-color method, a press method, a core back method, a sandwich method and the like. Examples of the heterogeneous materials can include other resins, metals, wood, ceramics and the like.

(Multilayer Shaped product)

One of preferred embodiments of the present invention is a multilayer shaped product comprising a layer made of the above-mentioned acrylic resin composition and a layer made of an active energy ray cured resin that is in contact with the layer made of the acrylic resin composition. When the above heterogeneous material is laminated on the shaped product of the present invention, it is preferable that the layer made of the active energy ray cured resin is in contact with a surface on which the heterogeneous material is not laminated in the shaped product of the present invention. The multilayer shaped product is preferably a laminate film.

An active energy ray cured resin is a cured product of an active energy ray curable composition by irradiation of an active energy ray. The layer made of the active energy ray cured resin can be obtained by applying an active energy ray curable composition to a shaped product made of an acrylic resin composition using a known method such as a gravure printing method, a comma coating method, a slit die coating method or a screen printing method, optionally removing a solvent and curing the active energy ray curable composition with an active energy ray.

Examples of the active energy ray cured resin can include polyesters; epoxy-resins; polyester (meth)acrylate resins; epoxy (meth)acrylate resins such as a bisphenol A type epoxy acrylate resin, a phenol novolak type epoxy acrylate resin, a cresol novolak type epoxy acrylate resin and a carboxy group-modified epoxy (meth)acrylate-resin; polyol(meth)acrylate resins; and (meth)acrylate resins such as a urethane (meth)acrylate resin. Among these, (meth)acrylate resins are preferable from the viewpoint of optical properties. The urethane(meth)acrylate resin is obtained by reacting a urethane resin made from a polyol and an organic isocyanate with a hydroxy group-containing (meth)acryic acid ester, and followed by curing with an active energy ray. Examples of the polyol can include polytetramerthylene glycol, polyester diol of ethylene glycol and adipic acid, $\varepsilon$-caprolactone modified polyester diol, polypropylene glycol, polyethylene glycol, polycarbonate diol, hydroxy group-terminated hydrogenated polyisoprene, hydroxy group-terminated polybutadiene, hydroxy group-terminated polyisobutylene and the like. Examples of the organic isocyanate can include tolylene diisocyanate, isophorone diisocyanate, diphenylmethane diisocyanate, hexamethylene diisocyanate, xylylene diisocyanate and the like. Examples of the hydroxy group-containing (meth) acrylic acid ester can include hydroxyethyl(meth)acrylate, hydroxypropyl(meth)acrylate, hydroxybutyl (meth)acrylate, pentaerythritol triacrylate and the like. Examples of the active energy ray cured resin can include an ultraviolet cured resin, an infrared cured resin, an X-ray cured resin, a $\gamma$ ray cured resin, an electron beam cured resin, a proton ray cured resin, a neutron ray cured resin and the like. Among these, an ultraviolet cured resin or an electron beam cured resin is preferable from the viewpoints of curing rate, availability of an active energy ray irradiation device, cost and the like, and an ultraviolet cured resin is more preferable.

Examples of the active energy ray can include electromagnetic waves such as ultraviolet ray, infrared ray, X-ray and $\gamma$ ray, electron beam, proton ray, neutron ray and the like. Among these, ultraviolet ray or electron beam are preferable from the viewpoint of curing rate, availability of irradiation device, cost and the like, and ultraviolet ray is more preferable.

The irradiation intensity of the active energy ray is not particularly limited. It is preferable to set the irradiation intensity of light in a wavelength region effective for activation of the polymerization initiator in the active energy ray at 0.1 to 100 mW/cm$^2$. By setting the irradiation intensity at not less than 0.1 mW/cm$^2$, prolongation of the reaction time can be suppressed. By setting the irradiation intensity at not more than 100 mW/cm$^2$, it is possible to suppress radiant heat of a light source from radiating to the active energy ray curable composition within a short time. It is also possible to suppress heat of the polymerization reaction from generating in the active energy ray curable composition within a short time. Thereby, it is possible to suppress yellowing of the active energy ray cured resin. It is also possible to suppress deterioration of the adherend typified by a polarizer.

The irradiation time of the active energy ray can be appropriately selected according to the irradiation intensity. In the present embodiment, the integrated light quantity is expressed as a product of the irradiation intensity and the irradiation time. The integrated light quantity is preferably set at 10 to 5,000 mJ/cm$^2$, more preferably 50 to 2,000 mJ/cm$^2$, and still more preferably 100 to 1,000 mJ/cm$^2$. By setting the integrated light quantity in the above range, it is possible to obtain a layered product which causes less deterioration of the thermoplastic resin and the active energy ray cured resin and has sufficient adhesive force.

The active energy ray curable composition comprises a monomer or oligomer having at least one functional group capable of causing a curing reaction upon irradiation with active energy rays in the molecule. Examples of the functional group can include a group having an ethylenic double bond, a group having an oxirane ring, a group having an oxetane ring, a group having a thiol group, a group having a maleimide group, a group having a hydrolyzable silyl group and the like.

Examples of the monomer or oligomer can include those which form radical polymerization type cured resins, such as an unsaturated polyester resin, an acrylic resin and an ene-thiol-resin; or those which form cationic polymer cured resins, such as an epoxy resin. As the monomer or oligomer, those which form a cationic polymer cured resin are preferable. Those which form a cationic polymer cured resin can be bonded to a functional group generated on a surface of a shaped product or a film by a pretreatment such as a corona treatment, thus enabling an improvement in cohesiveness between the shaped product or film and the active energy ray cured resin.

Specific examples of the monomer or oligomer can include methyl(meth)acrylate, ethyl(meth)acrylate, n-propyl(meth)acrylate, isopropyl(meth)acrylate, n-butyl(meth)acrylate, isobutyl (meth) acrylate, tert-butyl(meth)acrylate, pentyl(meth)acrylate, isoamyl(meth)acrylate, hexyl(meth)acrylate, heptyl (meth)acrylate, octyl(meth)acrylate, isooctyl (meth)acrylate, 2-ethylhexyl(meth)acrylate, nonyl (meth)acrylate, decyl(meth)acrylate, isodecyl (meth)acrylate, undecyl(meth)acrylate, dodecyl (meth)acrylate, lauryl(meth)acrylate, stearyl (meth)acrylate, isostearyl(meth)acrylate, benzyl (meth)acrylate, isobornyl(meth)acrylate, bornyl (meth)acrylate, tricyclodecanyl(meth)acrylate, dicyclopentanyl (meth)acrylate, dicyclopentenyloxyethyl (meth) acrylate, 4-butylcyclohexyl(meth)acrylate, 2-hydroxyethyl (meth)acrylate, 2-hydroxypropyl(meth)acrylate, 2-hydroxybutyl(meth)acrylate, 4-hydroxybutyl (meth)acrylate, 2-hydroxy-3-phenoxypropyl (meth)acrylate, butoxyethyl(meth)acrylate, ethoxydiethylene glycol (meth)acrylate, benzyl (meth)acrylate, phenoxyethyl (meth)acrylate, tetrahydrofurfuryl (meth)acrylate, polyethylene glycol (meth)acrylic acid monoester, polypropylene glycol(meth)acrylic acid monoester, methoxyethylene glycol(meth)acrylate, ethoxyethyl (meth)acrylate, methoxypolyethylene glycol (meth)acrylate, methoxypolypropylene glycol (meth)acrylate, dimethylaminoethyl (meth)acrylate, diethylaminoethyl (meth)acrylate, 7-amino-3,7-dimethyloctyl (meth)acrylate, 4-acryloylmorpholine, trimethylolpropane tri(meth)acrylate, trimethylolpropane trioxyethyl(meth)acrylate, pentaerythritol tri(meth)acrylate, ethylene glycol di(meth)acrylate, triethylene glycol diacrylate, tetraethylene glycol di(meth)acrylate, polyethylene glycol di(meth)acrylate, 1,4-butanediol di(meth)acrylate, 1,6-hexanediol di(meth)acrylate, neopentyl glycol di(meth)acrylate, tripropylene glycol di(meth)acrylate, an adduct of (meth)acrylic acid of bisphenol A diglycidyl ether at both ends, pentaerythritol tri(meth)acrylate, pentaerythritol tetra(meth)acrylate, polyester di(meth)acrylate, tris(2-hydroxyethyl)isocyanurate tri(meth)acrylate, tris(2-(2,3-dihydroxypropoxy)ethyl)isocyanurate tri(meth)acrylate, tris(2-hydroxyethyl)isocyanurate di(meth)acrylate, cyclohexane dimethanol di(meth)acrylate, tricyclodecane dimethanol di(meth)acrylate, di(meth)acrylate of diol which is an adduct of ethylene oxide or propylene oxide of bisphenol A, di(meth)acrylate of diol which is an adduct of ethylene oxide or propylene oxide of hydrogenated bisphenol A, epoxy (meth)acrylate in which (meth)acrylate is added to diglycidyl ether of bisphenol A, (3-ethyloxetan-3-yl) (meth)acrylate;

(meth)acrylamide-compounds such as N-hydroxyethyl(meth)acrylamide; styrene compounds such as styrene, indene, p-methylstyrene, $\alpha$-methylstyrene, p-methoxystyrene, p-tert-butoxystyrene, p-chloromethylstyrene, p-acetoxystyrene and divinylbenzene; vinyl fatty acid ester such as vinyl acetate, vinyl propionate, vinyl butyrate, vinyl caproate, vinyl benzoate and vinyl cinnamate;

compound having an oxirane ring, such as dicyclopentadiene dioxide, limonene dioxide, 4-vinylcyclohexene dioxide, 3',4'-epoxycyclohexylmethyl-3,4-epoxycyclohexane carboxylate, bis(3,4-epoxycyclohexylmethyl)adipate, 1,6-hexanediol diglycidyl ether, trimethylolpropane triglycidyl ether, pentaerythritol tetraglycidyl ether, polytetramethylene glycol diglycidyl ether, hydrogenated bisphenol A diglycidyl ether, epoxidized vegetable oil, 2-(3,4-epoxycyclohexyl)ethyltrimethoxysilane, 2-(3,4-epoxycyclohexyl)ethyltriethoxysilane, 3-glycidoxypropyltrimethoxysilane, 3-glycidoxypropylmethyldimethoxysilane, polybutadiene diglycidyl ether having hydroxyl groups at both ends, an internal epoxidized product of polybutadiene, a compound obtained by partially epoxidizing a double bond of a styrene-butadiene copolymer (such as "EPOFRIEND" manufactured by Daicel Chemical Industries, Ltd.), a pound obtained by partially epoxidizing an isoprene unit of a block copolymer of an ethylene-butylene copolymer and polyisoprene (such as "L-207" manufactured by KRATON) and polyamideamine epichlorohydrin;

compounds having an oxetane ring, for example, alkoxyalkyl group-containing monofunctional oxetanes such as 3-ethyl-3-hydroxymethyloxetane and 3-ethyl-3-(2-ethylhexyloxymethyl)oxetane, aromatic group-containing monofunctional oxetanes such as 3-ethyl-3-phenoxymethyloxetane, xylylenebisoxetane, 1,4-bis[(3-ethyloxetan-3-yl)methoxymethyl]benzene, 1,4-bis[(3-ethyloxetan-3-yl)methoxy]benzene, 1,3-bis[(3-ethyloxetan-3-yl)methoxy]benzene, 1,2-bis[(3-ethyloxetan-3-yl)methoxy]benzene, 4,4'-bis[(3-ethyloxetan-3-yl)methoxy]biphenyl, 2,2'-bis[(3-ethyloxetan-3-yl)methoxy]biphenyl, 3,3',5,5'-tetramethyl-4,4'-bis[(3-ethyloxetan-3-yl)m ethoxy]biphenyl, 2,7-bis[(3-ethyloxetan-3-yl)methoxy]naphthalene, bis[4-{(3-ethyloxetan-3-yl)methoxy}phenyl]methane, bis[2-{(3-ethyloxetan-3-yl)methoxy}phenyl]methane, 2,2-bis[4-{(3-ethyloxetan-3-yl)methoxy}phenyl]propan e, etherified modified product of a novolak type phenol-formaldehyde resin with 3-chloromethyl-3-ethyloxetane, 3(4),8(9)-bis[(3-ethyloxetan-3-yl)methoxymethyl]-tri cyclo[5.2.1.0$^{2,6}$]decane, 2,3-bis[(3-ethyloxetan-3-yl)methoxymethyl]norbornane, 1,1,1-tris[(3-ethyloxetan-3-yl)methoxymethyl]propane, 1-butoxy-2,2-bis[(3-ethyloxetan-3-yl)methoxymethyl]b utane, 1,2-bis[{2-(3-ethyloxetan-3-yl)methoxy}ethylthio]eth ane, bis[{4-(3-ethyloxetan-3-yl)methylthio}phenyl]sulfide, 1,6-bis[(3-ethyloxetan-3-yl)methoxy]-2,2,3,3,4,4,5,5 -octafluorohexane, 3-[(3-ethyloxetan-3-yl)methoxy]propyltrimethoxysilan e, 3-[(3-ethyloxetan-3-yl)methoxy]propyltriethoxysilane, a hydrolysis condensate of 3-[(3-ethyloxetan-3-yl)methoxy]propyltrialkoxysilane, a condensate of tetrakis[(3-ethyloxetan-3-yl)methyl]silicate and the like;

vinyl ethers such as cyclohexyl vinyl ether, 2-ethylhexyl vinyl ether, dodecyl vinyl ether, 4-hydroxybutyl vinyl ether, diethylene glycol monovinyl ether, triethylene glycol divinyl ether and cyclohexanedimethanol divinyl ether; and N-vinyl compounds such as N-vinylpyrrolidone and N-vinylmorpholine.

Among these, those having a hydrocarbon group-substituted or unsubstituted acryloyloxy group having 1 to 20 carbon atoms, a hydrocarbon group-substituted or unsubstituted acryloylthio group having 1 to 20 carbon atoms, or a hydrocarbon group-substituted or unsubstituted acryloylaza group having 1 to 20 carbon atoms are preferably used, those having a (meth)acryloyloxy group, a (meth)acryloylthio group or a (meth)acryloylaza group are more preferably used, those having a (meth)acryloyloxy group or a (meth)acryloylaza group are still more preferably used, and those having a (meth)acryloyloxy group is yet more preferably used. Specific examples of preferably used ones can include polyvalent (meth)acrylates or mono(meth)acrylates such as a polyester acrylate, a urethane acrylate, a polyetheracrylate, an epoxy acrylate, a polyester methacrylate, a urethane methacrylate, a polyether methacrylate and an epoxy methacrylate; N-substituted or unsubstituted polyvalent (meth)acrylamides or N-substituted or unsubstituted mono(meth)acrylamides; and polyvalent (meth)acrylic acid thioesters or mono(meth)acrylic acid thioesters.

Examples of the hydrocarbon group having 1 to 20 carbon atoms can include alkyl groups such as a methyl group, an ethyl group, an n-propyl group, an isopropyl group, an n-butyl group, an isobutyl group, a sec-butyl group, a tert-butyl group, a 2-methylbutyl group, a 3-methylbutyl group, a 2-ethylbutyl group, a 3-ethylbutyl group, a 2,2-dimethylbutyl group, a 2,3-dimethylbutyl group, an n-pentyl group, a neopentyl group, an n-hexyl group, a 2-methylpentyl group, a 3-methylpentyl group, an n-heptyl group, an n-octyl group, a 2-ethylhexyl group, an n-decyl group, an n-dodecyl group, an n-hexadecyl group and an n-eicosyl group; cycloalkyl groups such as a cyclopropyl group, a cyclobutyl group, a cyclopentyl group, a cyclohexyl group and a cyclooctyl group; and aryl groups such as a phenyl group and a naphthyl group. The hydrocarbon group having 1 to 20 carbon atoms is particularly preferably a methyl group from the viewpoint of excellent availability and curing rate of the compound. The hydrocarbon group having 1 to 20 carbon atoms may have a substituent. The substituent of the hydrocarbon group having 1 to 20 carbon atoms may be any substituent as long as it does not inhibit active energy ray curability, and examples thereof can include alkoxy groups such as a methoxy group, an ethoxy group, an isopropoxy group and a tert-butoxy group; and halogen atoms such as a chlorine atom and a bromine atom.

As the N-substituent group of the amide, mentioned can be a hydrocarbon group having 1 to 6 carbon atoms. Examples of the hydrocarbon group having 1 to 6 carbon atoms can include alkyl groups such as a methyl group, an ethyl group, an n-propyl group, an isopropyl group, an n-butyl group, an isobutyl group, a sec-butyl group, a tert-butyl group, a 2-methylbutyl group, a 3-methylbutyl group, a 2-ethylbutyl group, a 3-ethylbutyl group, a 2,2-dimethylbutyl group, a 2, 3-dimethylbutyl group, an n-pentyl group, a neopentyl group, an n-hexyl group, a 2-methylpentyl group and a 3-methylpentyl group; cycloalkyl groups such as a cyclopropyl group, a cyclobutyl group, a cyclopentyl group and a cyclohexyl group; and aryl groups such as a phenyl group. From the viewpoint of excellent curing rate, the hydrocarbon group having 1 to 6 carbon atoms is preferably a methyl group or an ethyl group. The hydrocarbon group having 1 to 6 carbon atoms may have a substituent. The substituent of the hydrocarbon group having 1 to 6 carbon atoms may be any substituent as long as it does not inhibit active energy ray curability of the active energy ray curable group, and examples thereof can include alkoxy groups such as a methoxy group, an ethoxy group, an isopropoxy group and a tert-butoxy group; and halogen atoms such as a chlorine atom and a bromine atom.

Examples of a commercially available active energy ray curable composition can include "UNIDIC V-6850" manufactured by DIC Corporation, "HITAROID 7975" manufactured by Hitachi Chemical Co., Ltd., "ACRIT 8KX-078" manufactured by Taisei Fine Chemical Co., Ltd. , "HITAROID 7902-1" manufactured by Hitachi Chemical Co., Ltd., "ACRIT 8UH-078" manufactured by Taisei Fine Chemical Co., Ltd., "UNIDIC RC29-124" manufactured by DIC Corporation, "BEAMSET 1200W" manufactured by Arakawa Chemical Industries, Ltd. and the like.

In the present invention, from the viewpoint of handleability, reactivity and adhesiveness, a compound having an oxirane ring or a compound having an oxetane ring is preferably used in the active energy ray curable composition, and tetrahydrofurfuryl (meth)acrylate, 3' ,4'-epoxycyclohexylmethyl 3,4-epoxycyclohexane carboxylate, tris(2-hydroxyethyl)isocyanurate tri(meth)acrylate are more preferably used.

The active energy ray curable composition preferably comprises an active energy ray polymerization initiator. Examples of the active energy ray polymerization initiator can include, under irradiation of an active energy ray, those which generate a radical (radical polymerization initiator), those which generate a cation (cationic polymerization initiator), those which generate a base (base generator), those which generate an acid (Acid generator) and the like.

Examples of the radical polymerization initiator can include acetophenones such as 1-hydroxycyclohexyl phenyl ketone, 2,2-dimethoxy-1,2-diphenylethan-1-one and 2-hydroxy-2-methyl-1-phenylpropan-1-one; benzophenones such

as benzophenone, benzoylbenzoic acid, hydroxybenzophenone, 3,3'-dimethyl-4-methoxybenzophenone and acrylated benzophenone; benzoins such as benzoin, benzoin methyl ether and benzoin isopropyl ether; and sulfur compounds such as tetramethylthiuram monosulfide and thioxanthone. Among these, acetophenones or benzophenones are preferable and 1-hydroxycyclohexyl phenyl ketone is more preferable from the viewpoint of reactivity, transparency and the like, Examples of commercially available radical polymerization initiator can include "IRGACURE 184" (1-hydroxycyclohexyl phenyl ketone, manufactured by BASF Corporation), "Solvaslon BIPE" (manufactured by KUROGANE KASEI Co., Ltd.), "Solvaslon BIBE" (manufactured by KUROGANE KASEI Co., Ltd.), "IRGACURE 651" (2,2-dimethoxy-1,2-diphenylethan-1-one; manufactured by BASF Corporation), "DAROCUR 1173" (2-hydroxy-2-methyl-1-phenylpropan-1-one manufactured by BASF Corporation), "IRGACURE 2959" (manufactured by BASF Corporation), "IRGACURE 127" (manufactured by BASF Corporation), "IRGACURE 907" (manufactured by BASF Corporation), "IRGACURE 369" (manufactured by BASF Corporation), "KAYACURE BP" (manufactured by Nippon Kayaku Co., Ltd.), "IRGACURE 379" (manufactured by BASF Corporation), "DAROCUR TPO" (manufactured by BASF Corporation), "IRGACURE 819" (manufactured by BASF Corporation), "IRGACURE 819DW" (manufactured by BASF Corporation), "IRGACURE 784" (manufactured by BASF Corporation), "IRGACURE OXE 01" (manufactured by BASF Corporation), "IRGACURE OXE 02" (manufactured by BASF Corporation), "IRGACURE 754" (manufactured by BASF Corporation), "IRGACURE 500" (manufactured by BASF Corporation), "IRGACURE 1800" (manufactured by BASF Corporation), "IRGACURE 1870" (manufactured by BASF Corporation), "DAROCUR 4265" (manufactured by BASF Corporation), "KAYACURE DETX-S" (manufactued by Nippon Kayaku Co., Ltd.), "ESACURE KIP 150" (manufactued by Lamberti), "S-121" (manufactued by Shinko Technical Research Co., Ltd.), "SEIKUOL BEE" (manufactued by Seiko Chemical Co., Ltd.) and the like.

Examples of the cationic polymerization initiator can include onium salt initiators such as a sulfonium salt initiator and an iodonium salt initiator, sulfonic acid derivatives, carboxylic acid esters, aryldiazonium salts, iron-arene complexes, pyridinium salts, quinolinium salts, o-nitrobenzyl group-containing compounds and the like.

Examples of the sulfonium salt initiator can include p-hydroxyphenylbenzylmethylsulfonium salts such as a p-phenylbenzylmethylslfonium salt, a p-phenyldimethylsulfonium salt and benzylmethyl p-hydroxyphenylsulfonium hexafluoroantimonate; triarylsulfonium salts such as a triphenylsulfonium salt, a diphenyl-4-(phenylthio)phenylsulfonium salt and a diphenyl-4-thiophenoxyphenylsulfonium salt; and disulfonium salts having a bis[4-(diphenylsulfonio)phenyl]sulfide skeleton, such as 4,4-bis[di(β-hydroxyethoxy)phenylsulfonio]phenylsulf ide bishexafluoroantimonate. As the counter anion of the sulfonium salt, mentioned can be $SbF_6^-$, $AsF_6^-$, $PF_6^-$, $BF_4^-$ or the like. Among these, $PF_6^-$ and $SbF_6^-$ are preferable in view of reactivity and stability.

Examples of the iodonium salt initiator can include iodonium salts such as diphenyliodonium, bis(4-tert-butylphenyl)iodonium, (4-tert-butoxyphenyl)phenyliodonium and (4-methoxyphenyl)phenyliodonium.

Among these cationic polymerization initiators, triarylsulfonium salts such as a diphenyl-4-(phenylthio)phenylsulfonium salt and a diphenyl-4-thiophenoxyphenylsulfonium salt are preferable from the viewpoint of thermal stability. Examples of commercially available cationic polymerization initiator can include "CPI-100P" (manufactured by San-Apro Ltd.), "CPI-101A" (manufactured by San-Apro Ltd.), "IRGACURE 250" (manufactured by BASF Corporation), "ADEKA OPTOMER SP-172" (manufactured by ADEKA CORPORATION), "ADEKA OPTOMER SP-170" (manufactured by ADEKA CORPORATION), "ADEKA OPTOMER SP-152" (manufactured by ADEKA CORPORATION), "ADEKA OPTOMER SP-150" (manufactured by ADEKA CORPORATION), "Sun-Aid SI-60L" (manufactured by Sanshin Chemical Industry Co., Ltd.), "Sun-Aid SI-80L" (manufactured by Sanshin Chemical Industry Co., Ltd.), "Sun-Aid SI-100L" (manufactured by Sanshin Chemical Industry Co., Ltd.), "Sun-Aid SI-150L" (manufactured by Sanshin Chemical Industry Co., Ltd.) and the like.

The active energy ray cured resin may further comprise, as other components, for example, crosslinking agents, sensitizers, diluents, tackifiers, softening agents, fillers, stabilizers, pigments, dyes and the like.

In the multilayer shaped product of the present invention, the thickness of the layer made of the acrylic resin composition is preferably 10 to 1, 000 μm, more preferably 30 to 300 μm, and still more preferably 50 to 200 μm, and the thickness of the layer made of the acrylic energy ray cured resin is preferably 0.01 μm to 60 μm, more preferably 0.1 μm to 50 μm, still more preferably 0.5 μm to 30 μm, and yet more preferably 1 μm to 10 μm.

The laminated film which is the multilayer shaped product of the present invention has a lower limit of total thickness of preferably 10 um, more preferably 30 μm, and still more preferably 50 μm, while a upper limit of the total thickness of preferably 1,000 μm, more preferably 500 μm, still more preferably 300 μm, and yet more preferably 200 μm.

In the multilayer shaped product of the present invention, a layer made of other thermoplastic resins may be laminated in contact with a surface opposite to a surface in contact with a layer made of an active energy ray cured resin. Examples of other thermoplastic resin suited for lamination can include a polycarbonate resin, a polyethylene terephthalate resin, a polyamide resin, a polyethylene resin, a polypropylene resin, a polystyrene resin, a polyvinyl chloride resin, other (meth)acrylic resins, ABS (acrylonitrile-butadiene-styrene copolymer), an ethylene vinyl alcohol resin, a polyvinyl butyral resin, a polyvinyl acetal resin, a styrene thermoplastic elastomer, an olefinic thermoplastic elastomer, an acrylic thermoplastic elastomer and the like. The layer made of other thermoplastic resins to be laminated on the opposite surface may be laminated by bonding to a shaped product made of an acrylic resin composition using

an adhesive, or may be laminated by coextrusion molding of an acrylic resin composition and a thermoplastic resin.

In the multilayer shaped product of the present invention, a layer made of other resins may be laminated in contact with a surface of the side of a layer made of an active energy ray cured resin. The layer made of other resin to be laminated on the side of the layer made of an active energy ray cured resin can be obtained by, for example, applying an active energy ray curable composition to a shaped product made of an acrylic resin composition, optionally removing a solvent, and curing the active energy ray curable composition by irradiating with an active energy ray in a state of being in contact with a shaped product made of other resins.

Examples of applications of the shaped product of the present invention can include signboard parts such as advertising pillars, standing signboard, side signboards, transom signboards, roof signboards; display parts such as showcases, partition panels, store displays; illumination parts such as fluorescent covers, mood lighting covers, lamp shades, luminous ceilings, luminous walls and chandeliers; interior parts such as pendants and mirrors; structural parts such as doors, domes, safety window glasses, partitions, stairway wainscot, balcony wainscot and roofs of leisure buildings; transport machine-related parts such as airplane windshields, pilot's visors, motorcycles, motorboat windshields, bus sun visors, vehicle side visors, rear visors, head wings and headlight covers; electronic equipment parts such as nameplates for acoustic imaging, stereo covers, television protective masks and display covers for vending machines; medical device parts such as incubator, and X-ray imaging machines parts; equipment related parts such as machine cover, instrument cover, experiment apparatus, ruler, dial face, and observation port; optical-related parts such as light guide plates and films for frontlight and light guide plates and films for backlight of display devices, liquid crystal protection plates, Fresnel lenses, lenticular lenses, and front plates, diffuser plates and reflectors for various displays; traffic-related parts such as traffic signs, guide plates, road mirrors and soundproof walls; film members such as surface materials for automobile interiors, surface material for emblem, surface materials for mobile phones, marking films and metallic decorating film; household electronics parts such as canopies and control panels of washing machines and top panels of rice cookers; and other goods such as greenhouses, large water tanks, box water tanks, clock panels, bathtubs, sanitary appliances, desk mats, game parts, toys, musical instrument, face protection masks during welding and the like.

The shaped product of the present invention can be suitably used in, for example, various covers, various terminal boards, printed circuit boards, speakers, and optical apparatuses such as microscopes, binoculars, cameras and clocks. Furthermore, the shaped product can be suitably used as parts related to imaging, optical recording, optical communication and information devices. Examples of the parts include finders for cameras, VTRs and projection television sets, filters, prisms, Fresnel lenses, protective films for substrates of various optical disks (e.g., VDs, CDs, DVDs, MDs, LDs, etc.), optical switches, optical connectors, liquid crystal displays, light-guiding films and sheets for liquid crystal displays, flat-panel displays, light-guiding films and sheets for flat-panel displays, plasma displays, light-guiding films and sheets for plasma displays, retardation films and sheets, polarizing films and sheets, protective films and sheets for polarizing plates, protective films and sheets for polarizers, wave plates, light-diffusing films and sheets, prism films and sheets, reflective films and sheets, antireflective films and sheets, viewing angle-enlarging films and sheets, antiglare films and sheets, brightness enhancing films and sheets, display element substrates for liquid-crystal and electroluminescence, touch panels, light-guiding films and sheets for touch panels, various front plates, and spacers between various modules. Specifically, the shaped product can be used for, for example, various liquid-crystal display devices, electroluminescent display devices, and touch panels of cellular phones, digital information devices, pagers, navigation, automotive-use liquid-crystal displays, liquid-crystal display monitors, dimmer panels, displays for OA equipment, and displays for AV equipment. Furthermore, the shaped product can be suitably used for, for example, known building materials, such as interior and exterior members for building use, curtain walls, roofing members, roofing materials, window members, gutters, exteriors, wall materials, floor materials, furnishing materials, members for the construction of roads, retroreflecting films and sheets, agricultural films and sheets, lighting covers, signs, and transparent sound barriers because of its excellent weatherability and the like.

The shaped product of the present invention can also be used in solar cell applications, for example, solar cell surface protective films, solar cell sealing films, solar cell back surface protective films, solar cell substrate films, protective films for gas barrier films and the like.

The shaped product of the present invention is suitable as a polarizer protective film. The polarizer protective film which is the shaped product of the present invention can be bonded to one or both surfaces of a polarizing film (polarizer) by curing the active energy ray curable composition as mentioned above. A known polarizing film can be used. As the polarizing film, mentioned can be stretched film comprising a polyvinyl alcohol resin and iodine. The thickness of the polarizing film is preferably 1 to 100 μm, more preferably 5 to 40 μm, and still more preferably 10 to 35 μm.

In the polarizing plate obtained by bonding the shaped product of the present invention to a polarizing film, the shaped product of the present invention prevents moisture from entering into the polarizing film, so that the polarizing plate causes less deterioration of polarization performance even when left to stand at high temperature and high humidity.

When the shaped product of the present invention is laminated on one surface of the polarizing film by curing the active energy ray curable composition, any other optical resin film can be laminated on the other surface of the polarizing film with an adhesive layer interposed therebetween. The optical resin film to be used is not particularly limited

by the resin material. Examples thereof can include a cellulose resin, a polycarbonate resin, a cyclic olefin resin, a (meth)acrylic resin, a polyethylene terephthalate resin and the like.

The cellulose resin is a resin obtained by esterifying a cellulose with a fatty acid or the like to introduce an alkanoyl group. Specific examples of the cellulose resin can include cellulose triacetate, cellulose diacetate, cellulose tripropionate, cellulose dipropionate and the like. Among these, cellulose triacetate is particularly preferable. Many products are commercially available as cellulose triacetate, which is also advantageous in view of ease of availability and cost. Examples of the commercially available cellulose triacetate can include "UV-50", "UV-80", "SH-80", "TD-80U", "TD-TAC" and "UZ-TAC" manufactured by FUJIFILM Corporation, "KC series" manufactured by Konica Minolta, Inc. and the like.

The cyclic olefin resin is a generic term for resins obtained by polymerizing a cyclic olefin. Examples thereof can include a ring-opening (co)polymer of a cyclic olefins (see JP H01-240517 A, JP H03-122137 A), an addition polymer of a cyclic olefins, a copolymer of a cyclic olefin and $\alpha$-olefin such as ethylene or propylene (see JP H03-14882 A), and a graft polymer obtained by modifying them with an unsaturated carboxylic acid or derivatives thereof, and hydrogenerated product thereof. As specific examples of the cyclic olefin, mentioned can be norbornene monomers.

Various products are commercially available as a cyclic olefinic resin. Specific examples thereof can include "ZEONEX", and "ZEONOR" manufactured by Zeon Corporation, "ARTON" manufactured by JSR Corporation, "TOPAS" manufactured by Polyplastics Co., Ltd., and "APEL" manufactured by Mitsui Chemicals, Inc.

It is possible to employ, as the (meth)acrylic resin, any (meth)acrylic resin as long as the effects of the present invention are not impaired. Examples thereof can include polymethacrylic acid ester such as polymethyl methacrylate, methyl methacrylate-(meth)acrylic acid copolymers, methyl methacrylate-(meth)acrylic acid ester copolymers, methyl methacrylate-acrylic acid ester-(meth)acrylic acid copolymers, methyl (meth)acrylate-styrene copolymers (MS resin, etc.), polymers having an alicyclic hydrocarbon group (e.g., methyl methacrylate-cyclohexyl methacrylate copolymer, methyl (meth)acrylate-norbornyl (meth)acrylate copolymer, etc.), copolymers of methyl methacrylate and a maleimide monomer (see JP 2013-033237 A, WO 2013/005634 A), (meth)acrylic resins having a ring structure in the molecule (see WO 2005/108438 A, JP 2009-197151 A), (meth)acrylic resin having a high glass transition temperature obtained by intramolecular crosslinking or intramolecular cyclization reaction, (meth)acrylic resins having a lactone ring structure (see JP 2000-230016 A, JP 2001-151814 A, JP 2002-120326 A, JP 2002-254544 A, JP 2005-146084 A) and the like. The (meth) acrylic resin having a lactone ring structure has high heat resistance and high transparency, and it is easy to increase the mechanical strength by biaxial stretching. Examples of commercially available (meth)acrylic resin can include "ACRYPET VH" and "ACRYPET VRL20A" manufactured by Mitsubishi Rayon Co., Ltd.

Examples of the polyethylene terephthalate resin can include polyethylene terephthalate resins described in WO 2011-162198 A, WO 2015-037527 A, WO 2007-020909 A, JP 2010-204630 A and the like.

The polarizing plate of the present invention can be used in an image display device. Specific examples of the image display device can include self-luminous type display devices such as an electroluminescence (EL) display, a plasma display (PD), and a field emission display (FED), and a liquid crystal display device. The liquid crystal display device comprises a liquid crystal cell and the polarizing plate disposed on at least one surface of the liquid crystal cell.

## EXAMPLES

The present invention will be specifically described below by way of Examples, but the present invention is not limited by these Examples. The present invention includes all embodiments constituted by any combination of matters expressing technical features such as characteristic values, forms, production methods and applications mentioned above.

Measurements of physical property values and the like in Examples and Comparative Examples were carried out by the following methods.

### [Peel Strength]

Small pieces having a width of 10 mm and a length of 50 mm were cut out from a polarizing plate. Each small piece was left to stand in an environment at a temperature of 23 °C and a relative humidity of 50% for 24 hours. An incision was made in a layer of an adhesive on the side of an acrylic resin composition film superimposed later using a cutter, a polarizing film and an acrylic resin composition film were peeled off at an angle of 180° at a tensile speed of 30 mm/minute in conformity with JIS-K6854-2 (1999) using a small tensile tester so as to separate into the acrylic resin composition film superimposed later and a multi-layered shaped product comprising a polarizing film. An average load per unit width required for peeling was measured.

[Melt Viscosity]

Using a capillary rheometer (CAPILOGRAPH 1D, manufactured by TOYO SEIKI SEISAKU-SHO, LTD.), pellets obtained by the method mentioned later were extruded at 270°C from a capillary having a diameter of 1 mmφ and a length of 40 mm at a piston speed of 10 mm/minute (shear rate is 122/sec), and the numerical value evaluated from shear stress generated during extrusion was defined as a met viscosity.

[Surface Hardness]

A film obtained by the method mentioned later was cut into test pieces measuring 10 cm × 10 cm, and pencil hardness was measured in conformity with JIS-K5600-5-4.

[Total Light Transmittance]

A film obtained by the method mentioned later was cut into test pieces measuring 50 cm × 50 cm, and total light transmittance was measured in conformity with JIS K7361-1 using a haze meter (SH7000, manufactured by NIPPON DENSHOKU INDUSTRIES CO., LTD.).

[Haze]

A film obtained by the method mentioned later was cut into test pieces measuring 50 cm × 50 cm, and haze was measured in conformity with JIS K7136 using a haze meter (SH7000, manufactured by NIPPON DENSHOKU INDUSTRIES CO., LTD.).

<Production Example 1 Production of (meth) acrylic Resin (A) >

To 100 parts by mass of methyl methacrylate, 0.1 part by mass of a polymerization initiator (2,2'-azobis(2-methylpropionitrile), hydrogen abstracting ability: 1%, 1 hour half-life temperature: 83°C) and 0.21 part by mass of a chain transfer agent (n-octylmercaptan) were added and dissolved to obtain a starting material solution.
To obtain a mixed solution, 100 parts by mass of ion-exchanged water, 0.03 part by mass of sodium sulfate and 0.45 part by mass of a suspending and dispersing agent were mixed.
In a pressure-resistant polymerization tank, 420 parts by mass of the mixed solution and 210 parts by mass of the starting material solution were charged and the polymerization reaction was started while stirring under a nitrogen atmosphere by setting a temperature at 70°C. After 3 hours from starting of the polymerization reaction, the temperature was raised to 90°C and stirring was continued for 1 hour to obtain a solution containing a bead-like copolymer dispersed therein. Although a polymer was slightly adhered to the wall of the polymerization tank or a stirring blade, the polymerization reaction proceeded smoothly without foaming.
The obtained copolymer dispersion was washed with ion-exchanged water and the bead copolymer was taken out by a bucket type centrifugal separator and then dried in a hot air dryer at 80°C for 12 hours to obtain a (meth)acrylic resin (A).

<Production Example 2 Production of Acrylic Block Copolymer (B1)>

A solution comprising toluene, hexamethyltriethylenetetramine, isobutylbis(2,6-di-tert-butyl-4-methylphenoxy)alumin μm, and sec-butyllithium was prepared. To this solution, 20 parts by mass of methyl methacrylate was added dropwise and polymerized to obtain a methacrylic acid ester polymer block (b-1). Then, 50 parts by mass of n-butyl acrylate was added dropwise, followed by polymerization to allow the acrylic acid ester polymer block (a) to grow from the end of the methacrylic acid ester polymer block (b-1). Subsequently, 30 parts by mass of methyl methacrylate was added dropwise, followed by polymerization to allow the methacrylic acid ester polymer block (b-2) to be grown from the end of the acrylic acid ester polymer block (a). Methanol was added to the reaction solution to inactivate living activity to obtain a (meth) acrylic block copolymer (B1). The acrylic block copolymer (B1)had a triblock structure of (b-1) - (a) - (b-2) and relative proportion of (b-1)-(a)-(b-2) was 30% by mass-50% by mass-20% by mass. The content of (a) was 50 parts by mass.

<Production Example 3 Production of Acrylic Block Copolymer (B2)>

A solution comprising toluene, hexamethyltriethylenetetramine, isobutylbis(2,6-di-tert-butyl-4-methylphenoxy)aluminum and sec-butyl lithium was prepared. To this solution, 11.3 parts by mass of methyl methacrylate was

added dropwise and polymerized to obtain methacrylic acid ester polymer block (b-1). Then, 77.4 parts by mass of n-butyl acrylate was added dropwise, followed by polymerization to allow the acrylic acid ester polymer block (a) to glow from the end of the methacrylic acid ester polymer block (b-1). Subsequently, 11.3 parts by mass of methyl methacrylate was added dropwise, followed by polymerization to allow the methacrylic acid ester polymer block (b-2) to be grown from the end of the acrylic acid ester polymer block (a). Methanol was added to the reaction solution to inactivate living activity to obtain a (meth) acrylic block copolymer (B2) . The (meth)acrylic block copolymer (B2) had a triblock structure of (b-1) - (a) - (b-2) and relative proportion of (b-1)-(a)-(b-2) was 11.3% by mass-77.4% by mass-11.3% by mass. The content of (a) was 77.4 parts by mass.

<Production Example 4 Production of Acrylic Block Copolymer (B3)>

A solution comprising toluene, hexamethyltriethylenetetramine, isobutylbis(2,6-di-tert-butyl-4-methylphenoxy)aluminum and sec-butyl lithium was prepared. To this solution, 50 parts by mass of methyl methacrylate was added dropwise and polymerized to obtain a methacrylic acid ester polymer block (b). Then, 25 parts by mass of n-butyl acrylate and 25 parts by mass of benzyl acrylate were added dropwise, followed by polymerization to allow the acrylic acid ester polymer block (a) to be grown from the end of the methacrylic acid ester polymer block (b) . To the reaction solution, methanol was added to inactivate living activity to obtain a (meth)acrylic block copolymer (B3). The (meth)acrylic block copolymer (B3) had a diblock structure of (b)-(a) and relative proportion of (b)-(a) was 50% by mass-50% by mass.

<Production Example 5 Production of Acrylic Block Copolymer (B4)>

A solution comprising toluene, hexamethyltriethylenetetramine, isobutylbis(2,6-di-tert-butyl-4-methylphenoxy)aluminum and sec-butyl lithium was prepared. To this solution, 15.7 parts by mass of methyl methacrylate was added dropwise and polymerized to obtain a methacrylic acid ester polymer block (b-1). Then, 63.6 parts by mass of n-butyl acrylate was added, followed by polymerization to allow the acrylic acid ester polymer block (a) to be grown from the end of the methacrylic acid ester polymer block (b-1). Subsequently, 20.7 parts by mass of methyl methacrylate was added dropwise, followed by polymerization to allow the (meth)acrylic acid ester polymer block (b-2) to be grown from the end of the acrylic acid ester polymer block (a). Methanol was added to the reaction solution to inactivate living activity to obtain a (meth) acrylic block copolymer (B4) . The (meth)acrylic block copolymer (B4) had a triblock structure of (b-1)-(a) -(b-2) and relative proportion of (b-1)-(a)-(b-2) was 15.7% by mass-63.6% by mass-20.7% by mass. The content of (a) was 63.6 parts by mass.

<Production Example 6 Production of Acrylic Elastomeric Polymer Particles (C)>

In a reactor equipped with a stirrer, a thermometer, a nitrogen gas feeding pipe, a monomer feeding pipe and a reflux condenser, 1,050 parts by mass of ion-exchange water, 0.3 part by mass of sodium polyoxyethylene tridecyl ether acetate and 0.7 part by mass of sodium carbonate were charged and the atmosphere in the reactor was replaced by a nitrogen gas. Then, the temperature in the reactor was raised to 80°C. In the reactor, 0.25 part by mass of potassium persulfate was added, followed by stirring for 5 minutes. To this, 245 parts by mass of a monomer mixture comprising 95.4% by mass of methyl methacrylate, 4.4% by mass of methyl acrylate and 0.2% by mass of allyl methacrylate was continuously added dropwise over 60 minutes. After completion of the dropwise addition, the polymerization reaction was performed for additional 30 minutes. Subsequently, 0.32 part by mass of potassium persulfate was added, followed by stirring for 5 minutes. Then, 315 parts by mass of a monomer mixture comprising 80.5% by mass of butyl acrylate, 17.5% by mass of styrene and 2% by mass of allyl methacrylate was continuously added dropwise over 60 minutes. After completion of the dropwise addition, the polymerization reaction was performed for additional 30 minutes. Subsequently, 0.14 part by mass of potassium persulfate was added, followed by stirring for 5 minutes. Then, 140 parts by mass of a monomer mixture comprising 95.2% by mass of methyl methacrylate, 4.4% by mass of methyl acrylate and 0.4% by mass of n-octylmercaptan was continuously added dropwise over 30 minutes. After completion of the dropwise addition, the polymerization reaction was performed for additional 60 minutes. By the above operation, a latex comprising acrylic elastomeric polymer particles was obtained. The latex comprising acrylic elastomeric polymer particles was coagulated by freezing. The coagulated latex was washed with water and then dried to obtain acrylic elastomeric polymer particles (C) having an average particles diameter of 0.23 μm.

<Production Example 7 Production of Active Energy Ray Curable Composition (U1)>

In a flask purged with nitrogen, 100 ml of toluene was charged. Then, 0.78 ml (2.86 mmol) of 1,1,4,7,10,10-hexamethyltriethylenetetramine and 12.7 ml of a 0.450 mol/L toluene solution of isobutylbis (2,6-di-tert-butyl-4-methylphenoxy)aluminum were sequentially added while stirring. The mixture was cooled to -20°C. To the mixture, 2.00 ml of

a 1.30 mol/L cyclohexane solution of sec-butyllithium was added and 3.58 ml of a mixture of 2.47 ml (10.4 mmol) of 1,1-dimethylpropane-1,3-dioldimethacrylate and 1.11 ml (10.4 mmol) of methyl methacrylate was added all at once to initiate anionic polymerization (first polymerization step). About 10 minutes after initiating of the anionic polymerization, the color of the solution changed from yellow to colorless. The mixture was stirred for additional 10 minutes from when the color turned colorless.

Then, 2.22 ml (20.8 mmol) of methyl methacrylate was added all at once while stirring the solution at -20°C. After 100 minutes, 37.4 ml (260 mmol) of n-butyl acrylate was added at a rate of 1 ml/minute and anionic polymerization was performed (second polymerization step).

Then, 10.0 ml of methanol was added while stirring the solution at -20°C to stop the anionic polymerization. The obtained solution was poured into 1 liter of methanol to form a precipitate. The precipitate was separated and then dried to obtain a (meth)acrylic polymer (Y). The (meth) acrylic polymer (Y) had a number average molecular weight Mn of 24,700, and a ratio Mw/Mn of a weight average molecular weight to the number average molecular weight of 1.21.

In a vessel with a stirrer, 30 parts by mass of benzyl acrylate, 4 parts by mass of tris(2-hydroxyethyl)isocyanurate triacrylate, 17 parts by mass of (3-ethyloxetan-3-yl)methyl acrylate, 6 parts by mass of 3-ethyl-3-hydroxymethyloxetane, 27 parts by mass of an alicyclic diepoxy compound (trade name of "CYRACURE UVR6110", manufactured by The Dow Chemical Company), 16 parts by mass of the (meth) acrylic polymer (Y), 3 parts by mass of 1-hydroxycyclohexyl phenyl ketone, and 2 parts by mass of diphenyl-4-(phenylthio)phenylsulfonium hexafluorophosphate (50% by mass propylene carbonate solution) were charged, followed by stirring for 24 hours to obtain an active energy ray curable composition (U1).

<Production Example 8 Production of Active Energy Ray Curable Composition (U2)>

In a vessel with a stirrer, 18.8 parts by mass of 3-ethyl-3-hydroxymethyloxetane, 81.2 parts by mass of an alicyclic diepoxy compound (trade name of "CYRACURE UVR6110", manufactured by The Dow Chemical Company), and 2 parts by mass of diphenyl-4-(phenylthio) phenylsulfonium hexafluorophosphate (50% by mass propylene carbonate solution) were charged, followed by stirring for 24 hours to obtain an active energy ray curable composition (U2).

Example 1

Dry-blended were 94 parts by mass of the (meth) acrylic resin (A) obtained in Production Example 1 and 6 parts by mass of the acrylic block copolymer (B1) obtained in Production Example 2. Then, the dry-blend was fed to a twin-screw extruder, melt-kneaded at 250°C, extruded into a strand, and cut with a pelletizer to obtain pellets of an acrylic resin composition. The obtained pellets (2 g) were interposed between two polyimide films, heated in a press molding machine at 245°C for 3 minutes and then pressurized for 90 seconds under the conditions of 50 kgf/cm$^2$ to form a film having a thickness of 100 μm. The same operation was performed to obtain another same film.

The active energy ray curable composition (U1) obtained in Production Example 7 was applied to one surface of a first film using a bar coater so as to have a thickness of 2 μm. A polarizing film having a thickness of 10 μm was superimposed on the coated surface of the active energy ray curable composition. An active energy ray curable composition (U1) was applied to the polarizing film using a bar coater so as to have a thickness of 2 μm. A second film was superimposed on the coated surface of the active energy ray curable composition. A laminate having a layer structure of film/active energy ray curable composition/polarizing film/active energy ray curable composition/film was pressed with a roller. Using a metal halide lamp (manufactured by GC Yuasa Corporation), ultraviolet ray was irradiated to the laminate from the side of the film superimposed later in such a laminate so that the integrated light quantity was 700 mJ/cm$^2$. The integrated light quantity was measured using a UV measuring equipment (manufactured by GS Yuasa Corporation). After the irradiation of ultraviolet ray, the laminate was left to stand in an environment at a temperature of 23°C and a relative humidity of 50% for 48 hours to obtain a polarizing plate. The evaluation results are shown in Table 1.

[Table 1]

Table 1

| | Ex. | | | | | | | | | | Comp.Ex. |
|---|---|---|---|---|---|---|---|---|---|---|---|
| | 1 | 2 | 3 | 4 | 5 | 6 | 7 | 8 | 9 | 10 | 1 |
| Proportions of shaped product | | | | | | | | | | | |
| (meth)acrylic resin(A) [parts] | 94 | 90 | 85 | 90 | 90 | 90 | 84 | 84 | 81 | 90 | 100 |
| acrylic block copolymer(B1) [parts] | 6 | 10 | 15 | | | | 10 | 6 | 3 | 10 | |
| acrylic block copolymer(B2) [parts] | | | | 10 | | | | | | | |
| acrylic block copolymer(B3) [parts] | | | | | 10 | | | | | | |
| acrylic block copolymer(B4) [parts] | | | | | | 10 | | | | | |
| acrylic elatomeric polymer particles(C) [parts] | | | | | | | 6 | 10 | 16 | | |
| Evaluation | | | | | | | | | | | |
| melt viscosity [Pa·S] | 602 | 520 | 408 | 462 | 489 | 480 | 564 | 723 | 790 | 520 | 750 |
| total light transmittance [%] | 92.2 | 92.0 | 92.0 | 90.7 | 92.3 | 92.1 | 92.0 | 92.3 | 92.0 | 92.0 | 93.0 |
| haze | 0.38 | 0.61 | 0.96 | 6.08 | 0.24 | 0.50 | 0.82 | 0.31 | 0.40 | 0.61 | 0.20 |
| surface hardness | 2H | HB | 2B | HB | HB | HB | HB | H | F | HB | 2H |
| peel strength [N/mm] | 0.014 | 0.114 | 0.159 | 0.045 | 0.026 | 0.095 | 0.151 | 0.069 | 0.021 | 0.020 | 0.010 |

Example 2

Pellets for evaluation, a film and a polarizing plate were obtained in the same manner as in Example 1 except that the amount of the (meth)acrylic resin (A) was changed to 90 parts by mass and the amount of the acrylic block copolymer (B1) was changed to 10 parts by mass. The evaluation results are shown in Table 1.

Example 3

Pellets for evaluation, a film and a polarizing plate were obtained in the same manner as in Example 1 except that the amount of the (meth)acrylic resin (A) was changed to 85 parts by mass and the amount of the acrylic block copolymer (B1) was changed to 15 parts by mass. The evaluation results are shown in Table 1.

Example 4

Pellets for evaluation, a film and a polarizing plate were obtained in the same manner as in Example 2 except that the acrylic block copolymer (B1) was changed to the acrylic block copolymer (B2) obtained in Production Example 3. The evaluation results are shown in Table 1.

Example 5

Pellets for evaluation, a film and a polarizing plate were obtained in the same manner as in Example 2 except that the acrylic block copolymer (B1) was changed to the acrylic block copolymer (B3) obtained in Production Example 4,. The evaluation results are shown in Table 1.

Example 6

Pellets for evaluation, a film and a polarizing plate were obtained in the same manner as in Example 2, except that the acrylic block copolymer (B1) was changed to the acrylic block copolymer (B4) obtained in Production Example 5. The evaluation results are shown in Table 1.

Example 7

Dry blended were 84 Parts by mass of the (meth)acrylic resin (A) obtained in Production Example 1, 10 parts by mass of the acrylic block copolymer (B1) obtained in Production Example 2 and 6 parts by mass of the acrylic elastomeric polymer particles (C) obtained in Production Example 6. Pellets for evaluation, a film and a polarizing plate were obtained in the same manner as in Example 1 except that the obtained dry-blend was used. The evaluation results are shown in Table 1.

Example 8

Pellets for evaluation, a film and a polarizing plate were obtained in the same manner as in Example 7 except that the amount of the acrylic block copolymer (B1) was changed to 6 parts by mass and the amount of the acrylic elastomeric polymer particles (C) was changed to 10 parts by mass. The evaluation results are shown in Table 1.

Example 9

Pellets for evaluation, a film and a polarizing plate were obtained in the same manner as in Example 7 except that the amount of the acrylic block copolymer (B1) was changed to 3 parts by mass and the amount of the acrylic elastomeric polymer particles (C) was changed to 16 parts by mass. The evaluation results are shown in Table 1.

Example 10

Pellets for evaluation, a film and a polarizing plate were obtained in the same manner as in Example 1 except that the active energy ray curable composition (U1) was changed to the active energy ray curable composition (U2) obtained in Production Example 8. The evaluation results are shown in Table 1.

Example 11

Dry blended were 94 parts by mass of the (meth)acrylic resin (A) obtained in Production Example 1, 6 parts by mass of the acrylic block copolymer (B1) obtained in Production Example 2, 2 parts by mass of an ultraviolet absorber (ADK STAB LA-31RG, manufactured by ADEKA CORPORATION) and 0.1 part by mass of an antioxidant (IRGANOX 1010, manufactured by BASF Japan Ltd.). Then, the dry-blend was fed to a twin-screw extruder, melt-kneaded at 250°C, extruded into a strand, and then cut using a pelletizer to obtain pellets of an acrylic resin composition. The obtained pellets (2 g) were interposed between two polyimide films and heated in a press molding machine at 245°C for 3 minutes and then pressurized under the conditions of 50 $kgf/cm^2$ for 90 seconds to form an ultraviolet absorber-containing film having a thickness of 100 μm.

The active energy ray curable composition (U1) obtained in Production Example 7 was applied to one surface of the film obtained in Example 1 using a bar coater so as to have a thickness of 2 μm. A polarizing film having a thickness of 10 μm was superimposed on the coated surface of the active energy ray curable composition. An active energy ray curable composition (U1) was applied to the polarizing film using a bar coater so as to have a thickness of 2 μm. The ultraviolet absorber-containing film was superimposed on the coated surface of the active energy ray curable composition. The laminate having a layer structure of film obtained in Example 1/active energy ray curable composition/polarizing film/active energy ray curable composition/ultraviolet absorber containing film was pressed with a roller. Using a metal halide lamp (manufactured by GC Yuasa Corporation), ultraviolet ray was irradiated to the laminate from the side of the film obtained in Example 1 in such a laminate so that the integrated light quantity was 700 $mJ/cm^2$. The integrated light quantity was measured using a UV measuring equipment (manufactured by GS Yuasa Corporation). After the irradiation of ultraviolet ray, the laminate was left to stand in an environment at a temperature of 23°C and a relative humidity of 50% for 48 hours to obtain a polarizing plate.

In order to evaluate adhesiveness of the ultraviolet absorber-containing film in the polarizing plate, sample having a length of 50 mm and a width of 25 mm was cut out from the obtained polarizing plate. After making a cut in a layer of an adhesive on the side of the ultraviolet absorber-containing film, an attempt was made to peel the sample by hand so as to be divided into the ultraviolet absorber-containing film and the polarizing film. As a result, the ultraviolet absorber-containing film was broken, thus failing to separate the ultraviolet absorber-containing film and the polarizing film, so that it was evaluated that the ultraviolet absorber-containing film has excellent adhesiveness to the ultraviolet cured resin.

Comparative Example 1

A polarizing plate was obtained in the same manner as in Example 1 except that the amount of the (meth) acrylic resin (A) was changed to 100 parts by mass and the amount of the acrylic block copolymer (B1) was changed to 0 part by mass. The evaluation results are shown in Table 1.

The polarizing plate of the present invention has high peel strength between the film and the active energy ray cured resin.

## Claims

1. A multi-layer shaped product, comprising
a layer made of an acrylic resin composition comprising a (meth) acrylic resin (A) and an acrylic block copolymer (B) comprising an acrylic acid ester polymer block (a) and a methacrylic acid ester polymer block (b), and a layer made of an active energy ray cured resin that is in contact with the layer made of the acrylic resin composition, wherein an amount of the acrylic block copolymer (B) comprised in the acrylic resin composition is not less than 1 part by mass and not more than 60 parts by mass based on 100 parts by mass of the acrylic resin composition.

2. The shaped product according to claim 1, wherein the acrylic block copolymer (B) comprises 20 to 80% by mass of the acrylic acid ester polymer block (a) and 20 to 80% by mass of the methacrylic acid ester polymer block (b) .

3. The shaped product according to claim 1 or 2, wherein the amount of the acrylic block copolymer (B) comprised in the acrylic resin composition is not less than 2 parts by mass and less than 15 parts by mass based on 100 parts by mass of the acrylic resin composition.

4. The shaped product according to claim 1, 2 or 3, wherein the acrylic resin composition further comprises an elastomeric polymer (C).

5. The shaped product according to claim 4, wherein the elastomeric polymer (C) is formed of particles and comprises a polymer (c2) comprising 70 to 99.8% by mass of an acrylic acid non-cyclic alkyl ester and 0.2 to 30% by mass of a crosslinkable monomer.

6. The shaped product according to claim 4, wherein the elastomeric polymer (C) is formed of core-shell multi-layered particles, at least one layer thereof comprises a polymer (c2) comprising 70 to 99.8% by mass of an acrylic acid non-cyclic alkyl ester and 0.2 to 30% by mass of a crosslinkable monomer, and at least one layer outside the layer comprising the polymer (c2) comprises a polymer (c1) comprising 80 to 100% by mass of methyl methacrylate.

7. The shaped product according to any one of claims 4 to 6, wherein an amount of the elastomeric polymer (C) comprised in the acrylic resin composition is 1 to 30 parts by mass based on 100 parts by mass of the acrylic resin composition.

8. The shaped product according to any one of claims 1 to 7, wherein an amount of a structural unit derived from a (meth)acrylic acid ester comprised in the (meth)acrylic resin (A) is not less than 80% by mass based on an amount of all structural units comprised in the (meth)acrylic resin (A).

9. The shaped product according to any one of claims 1 to 8, wherein the acrylic block copolymer (B) is a triblock copolymer.

10. The shaped product according to any one of claims 1 to 8, wherein the acrylic block copolymer (B) is a triblock copolymer represented by polymer block (b)-polymer block (a)-polymer block (b) and weight average molecular weights of two polymer blocks (b) are different from each other.

11. The shaped product according to any one of claims 1 to 10, wherein the active energy ray cured resin is an ultraviolet cured resin.

12. The shaped product according to any one of claims 1 to 11, wherein the active energy ray cured resin comprises a cationic polymer resin.

13. The shaped product according to any one of claims 1 to 12, which is a film having a total thickness of 10 to 1, 000 $\mu$m.

14. A polarizer protective film comprising the shaped product according to any one of claims 1 to 13.

15. A polarizing plate comprising the shaped product according to any one of claims 1 to 13.

## INTERNATIONAL SEARCH REPORT

International application No.
PCT/JP2017/023548

A. CLASSIFICATION OF SUBJECT MATTER
*B32B27/30*(2006.01)i, *C08L33/04*(2006.01)i, *C08L53/00*(2006.01)i, *G02B5/30*(2006.01)i

According to International Patent Classification (IPC) or to both national classification and IPC

B. FIELDS SEARCHED

Minimum documentation searched (classification system followed by classification symbols)
B32B1/00-43/00, C08K3/00-13/08, C08L1/00-101/14, G02B5/30, C08J5/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2015/182750 A1 (Kuraray Co., Ltd.), 03 December 2015 (03.12.2015), claims; paragraphs [0015] to [0090], [0121], [0138], [0156], [0165] to [0173], [0187] to [0245]<br>& CN 106414599 A & KR 10-2017-0013253 A<br>& TW 201605955 A | 1-4,8-11, 13-15<br>1-15 |
| Y | WO 2016/080124 A1 (Kuraray Co., Ltd.), 26 May 2016 (26.05.2016), claims; paragraphs [0016] to [0084], [0120] to [0152]<br>& TW 201623415 A | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 September 2017 (01.09.17) | 12 September 2017 (12.09.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

INTERNATIONAL SEARCH REPORT

International application No.
PCT/JP2017/023548

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-231015 A (Sumitomo Chemical Co., Ltd.), 14 October 2010 (14.10.2010), claims; paragraphs [0042] to [0046], [0089] to [0098] (Family: none) | 1-15 |
| A | WO 2014/073216 A1 (Kuraray Co., Ltd.), 15 May 2014 (15.05.2014), claims; paragraphs [0012] to [0052], [0064], [0075], [0080] to [0107] & US 2015/0299449 A1 claims; paragraphs [0002] to [0059], [0078], [0093], [0099] to [0141] & EP 2918636 A1 & CN 104781339 A & KR 10-2015-0082535 A & TW 201425437 A | 1-15 |
| A | WO 2015/076398 A1 (Kuraray Co., Ltd.), 28 May 2015 (28.05.2015), claims; paragraphs [0018] to [0058], [0067], [0083] to [0135] & US 2017/0158830 A1 claims; paragraphs [0020] to [0070], [0094], [0111] to [0182] & EP 3075780 A1 & CN 105764981 A & KR 10-2016-0090793 A & TW 201529683 A | 1-15 |
| A | JP 2014-160164 A (Sumitomo Chemical Co., Ltd.), 04 September 2014 (04.09.2014), claims; paragraphs [0081] to [0098] (Family: none) | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001247723 A
- WO 2008032732 A1
- JP 2009228000 A
- JP 2011016915 A
- JP 2012213911 A
- WO 2015076398 A1
- JP 2010231015 A
- WO 2014021264 A
- JP H01240517 A
- JP H03122137 A
- JP H0314882 A
- JP 2013033237 A
- WO 2013005634 A
- WO 2005108438 A
- JP 2009197151 A
- JP 2000230016 A
- JP 2001151814 A
- JP 2002120326 A
- JP 2002254544 A
- JP 2005146084 A
- WO 2011162198 A
- WO 2015037527 A
- WO 2007020909 A
- JP 2010204630 A